(19) Europäisches Patentamt

European Patent Office

Office européen des brevets

(11) **EP 1 093 105 A1**

(12) **EUROPEAN PATENT APPLICATION**
published in accordance with Art. 158(3) EPC

(43) Date of publication:
18.04.2001 Bulletin 2001/16

(51) Int. Cl.[7]: **G09F 9/00**, G02F 1/1335

(21) Application number: 00905396.8

(86) International application number:
**PCT/JP00/01159**

(22) Date of filing: 28.02.2000

(87) International publication number:
**WO 00/52667 (08.09.2000 Gazette 2000/36)**

(84) Designated Contracting States:
**DE NL**

(30) Priority: 02.03.1999 JP 5440599

(71) Applicant:
**MATSUSHITA ELECTRIC INDUSTRIAL CO., LTD.
Kadoma-shi, Osaka 571-8501 (JP)**

(72) Inventors:
• **UEMURA, Tsuyoshi
Kadoma-shi, Osaka 571-0063 (JP)**

• **KUBOTA, Hirofumi
Nishinomiya-shi, Hyogo 662-0084 (JP)**
• **NAKAO, Kenji
Asahi-ku, Osaka-shi, Osaka 535-0031 (JP)**

(74) Representative:
**Dempster, Benjamin John Naftel et al
Withers & Rogers,
Goldings House,
2 Hays Lane
London SE1 2HW (GB)**

(54) **ILLUMINATING DEVICE AND DISPLAY DEVICE PROVIDED WITH THE DEVICE**

(57) An illuminating device reduced in thickness and weight with a light guide plate eliminated, and a display device provided with the illuminating device. A backlighting illuminating device (2) to be disposed behind a liquid crystal display panel (3), comprising a light source (4) and a reflection plate (8), wherein the light source (4) is disposed in the vicinity of one end of the reflection plate (8) which is curved parabolically toward the display panel (3) as it extends away from the light source (4).

FIG. 1

EP 1 093 105 A1

## Description

Technical Field

The present invention relates to a backlight-type or Front-type illuminating unit and a display unit having such an illuminating unit.

Background Art

In a liquid crystal display unit built with a transmissive-type liquid crystal display panel, it is the conventional practice to adopt an illuminating method known as the backlight type, i.e., an illuminating method of causing panel display by the light irradiated from an illuminating unit provided on the back side of the liquid crystal display panel. Backlight-type illuminating unites are broadly divided into the direct backlight-type and the edge light-backlight type ones.

The direct backlight-type illuminating unit has a configuration in which a plurality of fluorescent tubes arranged in parallel on the back side of a liquid crystal display panel are used as light sources, and the back side of these fluorescent tubes is further covered with a translucent reflecting plate.

In the direct backlight-type illuminating unit, however, installation of the fluorescent tubes under the display panel results in a thicker illuminating unit, and hence in a larger overall size of the illuminating unit as a whole.

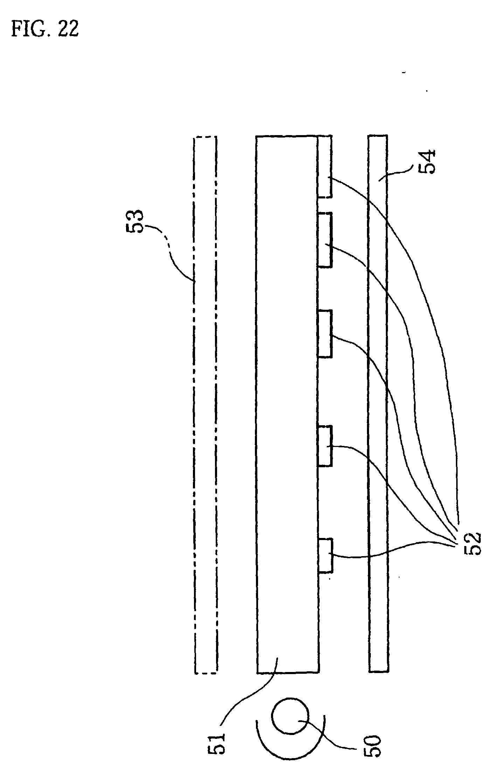

The edge-light backlight-type illuminating unit is therefore proposed to solve the above-mentioned problems. In the edge-light backlight-type illuminating unit, as shown in Fig.22, fluorescent tubes 50 are provided along the edge of a light guide plate 51, and a diffuser 52 is printed on the light guide plate 51 in response to the distance from the fluorescent tubes 50 so as to achieve uniform illuminating beams to the display panel 53. Further, a reflecting plate 54 is provided under the light guide plate 51 to improve the utilization rate of light.

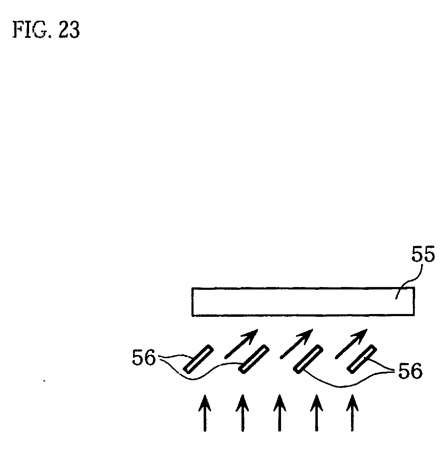

Particularly, in the case of a diffusing-type liquid crystal display panel 55, using a diagonal incident light upon liquid crystal display, it is the usual practice to use a diagonal-shaped visor 56 as shown in Fig.23.

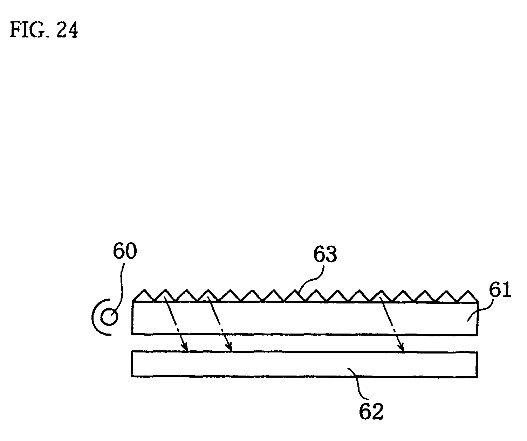

In a conventional liquid-crystal display unit having a configuration in which a reflection-type liquid crystal display panel is provided, an illuminating method known as the front light method, i.e., the illuminating method of causing panel display with the light irradiated from an irradiating unit provided in front of the liquid crystal display panel is commonly adopted. More specifically, as shown in Fig. 24, the fluorescent lamps 60 are provided along an edge of the light guide plate 61, and the concave notches 63 are cut on the light guide plate 61 in response to the distance from the fluorescent lamps 60 so as to achieve uniformity of the illuminating light beams to the liquid crystal display panel 62.

However, these conventional configurations have the following problems:

(Problems in the backlight-type illuminating unit)

(1) The direct backlight-type illuminating unit has a problem in that installing the fluorescent lamps under the display panel increases the thickness of the illuminating unit, leading to a larger size of the display unit as a whole.
(2) The edge light backlight-type illuminating unit has a problem of a larger thickness of the display unit as a whole for the necessity of the thickness of the light guide plate. Another defect is that a large-sized screen leads to a larger weight.
(3) In the case of the diffusion-type liquid crystal display unit, also, it is necessary to manufacture a visor, leading to an increased cost. The thickness is larger as well.

(Problems in the front-light-type illuminating unit)

In the front-light-type illuminating unit as well, use of the light guide plate requires an increased thickness of the display unit, and the larger the size of the screen becomes, the more the weight increases.

Disclosure of Invention

The present invention has an object to provide an illuminating unit which permits achievement of a smaller thickness and a reduced weight by eliminating a light guide plate, and to provide a display unit provided with such an illuminating unit.

To achieve the aforementioned object, the invention of the claim 1 of the present invention provides an illuminating unit to illuminate an object of illumination, comprising a light source and a reflecting plate, which reflects an incident light from the light source, and directs the reflected light to the object of illumination, wherein the light source is arranged in the proximity of an end of the reflecting plate.

In the aforementioned configuration, an illuminating unit is composed achieving a smaller thickness and a reduced weight by eliminating a light guide plate. The illuminating unit of this invention is applicable to both the front light type and the backlight type. The illuminating unit of this invention is applicable, not only limited, for example, to an illuminating unit of a liquid crystal display unit, but also to the illuminating unites in a wide range including an illuminating unit for the purpose of illuminating the exhibits in a show window.

The invention of the claim 2 provides an illuminating unit according to the claim 1, wherein the light source is arranged in the proximity of an end of the reflecting plate.

As described above, the same effects and advantages as those in the invention of the claim 1 are available also by arranging the light source in the proximity of the reflecting plate.

The invention of the claim 3 provides an illuminating unit according to the claim 1, wherein the above said light sources are arranged in the proximity of both ends of the reflecting plate.

As described above, the same effects and advantages as those in the invention of the claim 1 are available also by arranging the light sources in the proximity of the both ends of the reflecting plate.

The invention of the claim 4 provides an illuminating unit to illuminate an object of illumination, comprising a light source, and a reflecting plate which reflects an incident light from the light source and to directs the reflected light to the object of illumination, wherein the light source is arranged on a reflecting surface of the reflecting plate.

As described above, the light source may be arranged on the reflecting surface of the reflecting plate.

The invention of the claim 5 provides an illuminating unit according to the claim 4, wherein the light source is arranged in- the proximity of the center of the reflecting surface, and bends in a direction in which the more distant the said reflecting plate is from the light source, the more nearer it approaches the object of illumination.

As compared with a configuration in which the light source is arranged at an end of the reflecting surface, the aforementioned configuration of the illuminating unit in which the reflecting plate bends requires only a slight extent of bending of the reflecting plate even for the same area of the object of illumination, and the reflecting plate suffices to have a thickness of about a half. This permits reduction of the thickness of the illuminating unit in this invention.

The invention of the claim 6 provides an illuminating unit of the backlight type, arranged behind an object of illumination, comprising a light source, and a reflecting plate, arranged opposite to the back surfaces of the object of illumination, which reflects an incident light from the light source and directs the reflected light to the object of illumination, wherein the light source is arranged in the proximity of an end of the reflecting plate.

In the above-mentioned configuration, it is possible to illuminate the object of illumination without using a light guide plate, thus achieving a smaller thickness and size reduction of the backlight-type illuminating unit.

The invention of the claim 7 provides an illuminating unit according to the claim 6, wherein the reflecting plate is subjected to a reflecting angle adjusting treatment so that the incident angle of the reflected light entering the object of illumination becomes smaller accordingly as it becomes more distant from the light source so as to uniformly illuminate the object of illumination.

The above-mentioned configuration makes it possible to cause gradual increase in the degree of condensation of the light directed toward the object of illumination accordingly as the distance from the light source becomes longer. As the result, the light has a high light intensity but a small degree of condensation at the portions of the object of illumination near the light source, whereas at the portions distant from the light source, the light has a low light intensity but a large degree of condensation. Consequently, this averages the illuminating light as a whole, thus permitting illumination of the object of illumination substantially to be uniform. It is thus possible to prevent the occurrence of display non-uniformity caused by attenuation of the light to be irradiated onto the object of illumination accordingly as the distance from the light source becomes longer.

The invention of the claim 8 provides an illuminating unit according to the claim 7, wherein the reflecting angle adjusting treatment is to cause the reflecting plate to bend in a direction in which the more distant the said reflecting plate is from the light source, the more nearer it approaches the object of illumination.

In the aforementioned configuration, the reflecting angle on the reflecting plate becomes larger accordingly as the distance from the light source becomes longer. It is therefore become possible to ensure uniform illumination of the object of illumination.

The invention of the claim 9 provides an illuminating unit according to the claim 8, wherein the reflecting plate bends in a parabola shape.

By bending the reflecting plate into a parabola shape, as described above, the uniformity of illumination is further improved than that in the invention of the claim 8.

The invention of the claim 10 provides an illuminating unit according to the claim 7, wherein the reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

In the aforementioned configuration, the reflecting angle on the reflecting plate becomes larger accordingly as the distance from the light source becomes longer. It is therefore possible to ensure uniform illumination of the object of illumination.

The invention of the claim 11 provides an illuminating unit according to the claim 7, wherein the reflecting angle adjusting treatment is such that a number of the micro-projections each having a slant surface reflecting the incident light from the light source are formed on the reflecting plate, and these micro-projections are arranged so that the distribution density thereof becomes gradually larger accordingly as the distance from the light source becomes longer.

In the aforementioned configuration, the reflecting angle on the reflecting plate becomes larger accordingly as the distance from the light source becomes longer. It is therefore become possible to ensure uniform illumination of the object of illumination.

The invention of the claim 12 provides an illuminating unit according to the claim 7, wherein the reflecting angle adjusting treatment is such that the reflecting plate bends in a direction in which the more distant the said reflecting plate is from the light source, the more nearer it approaches the object of illumination, and a number of the micro-projections each having a slant surface reflecting the incident light from the light source are formed on the reflecting plate, and these micro-projections are arranged so that the inclination angle of the slant surface becomes gradually larger accordingly as the distance from the light source becomes longer.

In the above-mentioned configuration, bending of the reflecting plate and a change in the angle of the micro-projections bring about further improvement of the uniformity of illumination.

The invention of the claim 13 provides an illuminating unit according to the claim 7, wherein the reflecting angle adjusting treatment is such that the reflecting plate bends in a direction in which the more distant the said reflecting plate is from the light source, the more nearer it approaches the object of illumination, and a number of the micro-projections each having a slant surface reflecting the incident light from the light source are formed on the reflecting plate, and these micro-projections are arranged so that the distribution density thereof becomes gradually larger accordingly as the distance from the light source becomes longer.

In the above-mentioned configuration, bending of the reflecting plate and a change in the angle of the micro-projections bring about further improvement of the uniformity of illumination.

The invention of the claim 14 provides an illuminating unit according to the claim 6, wherein the illuminating unit has optical means which directs the light from the light source substantially in parallel to the reflecting plate.

The aforementioned configuration improves parallelism of the irradiation light onto the reflecting plate, and thereby improves the uniformity of illumination.

The invention of the claim 15 provides an illuminating unit according to the claim 14, wherein a diffusing plate is provided between the reflecting plate and the object of illumination.

In this configuration, the light reflected from the reflecting plate is diffused upon passing through the diffusing plate, thus achieving uniform distribution of the light. As the result, it improves the uniformity of illumination.

The invention of the claim 16 provides a display unit built by use of the illuminating unit according to the claim 6, wherein a transmissive-type liquid crystal display panel is arranged as an object of illumination on the surface side of the reflecting plate of the illuminating unit.

In this configuration, it becomes possible to reduce the thickness and the weight of the illuminating unit, and as the result, it is possible to reduce the thickness and the weight of the display unit as a whole.

The invention of the claim 17 provides a display unit built by use of the illuminating unit according to the claim 6, wherein a transmissive-type liquid crystal display panel is arranged as an object of illumination on the surface side of the reflecting plate of the illuminating unit, and the liquid crystal display panel is a liquid crystal display panel of the diffusion display mode in which the mode is switched over between a transmissive state and a diffusion state on the basis of the presence or absence of impression of a voltage.

The above-mentioned configuration permits the configuration of a display unit of a diffusion display mode that has achieved the reduction of thickness and weight.

The invention of the claim 18 provides a display unit built by use of the illuminating unit according to the claim 7, wherein a transmissive-type liquid crystal display panel is arranged as an object of illumination on the surface side of the reflecting plate of the illuminating unit, and the liquid crystal display panel is a liquid crystal display panel of the diffusion display mode in which the mode is switched over between a transmissive state and a diffusion state on the basis of the presence or absence of impression of a voltage; and the reflecting angle adjusting treatment of the reflecting plate is suitable for irradiating a diagonal light of a high parallelism to the liquid crystal display panel, in addition to the uniformity of illumination.

In the aforementioned configuration, a diagonal light having a high parallelism is irradiated onto the liquid crystal display panel. As the result, when the liquid crystal display panel is in a transmissive state (dark state), chances of the light reaching the observer are reduced as far as possible. Consequently, a display unit that gives an improved contrast can be constructed.

The invention of the claim 19 provides a display unit according to the claim 17, wherein the display unit has

EP 1 093 105 A1

optical means which converts the diffusing light from the light source substantially into a parallel light and directs the same to the reflecting plate.

In the aforementioned configuration, the parallelism of the, irradiated light onto the reflecting plate is improved. It therefore becomes possible to improve the parallelism of the diagonal light.

The invention of the claim 20 provides a display unit according to the claim 18, wherein the display unit has optical means which converts the diffusing light from the light source substantially into a parallel light and directs the same to the reflecting plate.

In the aforementioned configuration, the parallelism of the irradiated light onto the reflecting plate is improved. It therefore becomes possible to improve parallelism of the diagonal light.

The invention of the claim 21 provides a front-light-type illuminating unit arranged on the front side of an object of illumination, comprising a light source and a reflecting plate reflecting an incident light from the light source and directing the reflected light to an object of illumination; and supporting means that supports a base end of the reflecting plate in a rotatable manner so as to make the angle between the reflecting plate and the object of illumination adjustable, wherein the light source is provided on the leading end side of the reflecting plate.

In the above-mentioned configuration, it is possible to use a longer distance between the light source and the object of illumination by setting the reflecting plate wide open.

As the result, the difference in optical path length between the reflected light beams irradiated onto the object of illumination via the reflecting plate, and further, the difference in optical path length between the light irradiated onto the object of illumination directly from the light source and the reflected light will largely be reduced as compared with the conventional cases. This improves the uniformity of illumination.

The invention of the claim 22 provides a front light type illuminating unit arranged on the front side of an object of illumination, comprising a light source; and a reflecting plate reflecting an incident light to an object of illumination; and supporting means that supports a base end of the reflecting plate in a rotatable manner so as to make the angle between the reflecting plate and the object of illumination adjustable; wherein the said light source is provided on the side of the object of illumination.

In the above-mentioned configuration, the optical path length of the light irradiated onto the object of illumination from the light source via the reflecting plate is increased from that in the configuration in which the light source is provided on the reflecting plate side. This brings about an advantage that the difference in optical path length between the irradiated light beams is reduced, thus leading to an improved the uniformity of illumination.

The invention of the claim 23 provide an illuminating unit according to the claim 21, wherein, when the reflecting plate is at a position opposite to the object of illumination so as to ensure uniform illumination of the object of illumination, the reflecting plate is subjected to a reflecting angle adjusting treatment so that the incident angle of the reflected light entering the object of illumination becomes smaller as it moves toward the base end of the reflecting plate from the leading end.

In the aforementioned configuration, uniformity of the illumination is improved not only through adjustment of the angle of the reflecting plate, but also through a change in the reflecting angle.

The invention of the claim 24 provides an illuminating unit according to the claim 22, wherein, when the reflecting plate is at a position opposite to the object of illumination so as to ensure the uniform illumination of the object of illumination, the reflecting plate is subjected to a reflecting angle adjusting treatment so that the incident angle of the reflected light entering the object of illumination becomes smaller as it moves toward the base end of the reflecting plate from the leading end.

In the aforementioned configuration, uniformity of the illumination is improved not only through adjustment of the angle of the reflecting plate, but also through a change in the reflecting angle.

The invention of the claim 25 provides an illuminating unit according to the claim 23, wherein the reflecting angle adjusting treatment is such that the reflecting plate bends in a direction in which the nearer the said reflecting plate approaches the base end, the nearer it approaches the light source.

In the above-mentioned configuration, the reflecting angle on the reflecting plate becomes larger according as the distance from the light source becomes longer. This makes it possible to uniformly illuminate the object of illumination.

The invention of the claim 26 provides an illuminating unit according to the claim 24, wherein the reflecting angle adjusting treatment is such that the reflecting plate bends in a direction in which the nearer the said reflecting plate approaches the base end, the nearer it approaches the light source.

In the above-mentioned configuration, the reflecting angle on the reflecting plate becomes larger accordingly as the distance from the light source becomes longer. This makes it possible to uniformly illuminate the object of illumination.

The invention of the claim 27 provides an illuminating unit according to the claim 25, wherein the reflecting plate bends in a parabola shape.

By bending the reflecting plate into a parabola shape as described above, uniformity of the illumination is further improved than that in the invention of the claim 25.

The invention of the claim 28 provides an illuminating unit according to the claim 26, wherein the reflecting plate bends in a parabola shape.

By bending the reflecting plate into a parabola shape as described above, uniformity of the illumination is further improved than that in the invention of the claim 26.

The invention of the claim 29 provides an illuminating unit according to the claim 23, wherein the reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

In the above-mentioned configuration, the reflecting angle on the reflecting plate becomes larger accordingly as the distance from the light source becomes longer. This makes it possible to uniformly illuminate the object of illumination.

The invention of the claim 30 provides an illuminating unit according to the claim 24, wherein the reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

In the above-mentioned configuration, the reflecting angle on the reflecting plate becomes larger accordingly as the distance from the light source becomes longer. This makes it possible to uniformly illuminate the object of illumination.

The invention of the claim 31 provides an illuminating unit according to the claim 23, wherein the reflecting angle adjusting treatment is such that a number of the micro-projections each having a slant surface reflecting the incident light from the light source are formed on the reflecting plate, and said micro-projections are arranged so that the distribution density becomes gradually larger accordingly as the distance from the light source becomes longer.

In the above-mentioned configuration, the reflecting angle on the reflecting plate becomes larger according as the distance from the light source becomes longer. This makes it possible to uniformly illuminate the object of illumination.

The invention of the claim 32 provides an illuminating unit according to the claim 24, wherein the reflecting angle adjusting treatment is such that a number of the micro-projections each having a slant surface reflecting the incident light from the light source are formed on the reflecting plate, and these micro-projections are arranged so that the distribution density becomes gradually larger accordingly as the distance from the light source becomes longer.

The invention of the claim 33 provides an illuminating unit according to the claim 23, wherein the reflecting angle adjusting treatment is such that the reflecting plate bends in a direction in which the more distant the said reflecting plate is from the light source, the nearer it approaches the object of illumination; and a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

In the aforementioned configuration, uniformity of illumination is further improved by bending of the reflecting plate as well as by a change in angle of the micro-projections.

The invention of the claim 34 provides an illuminating unit according to the claim 24, wherein the reflecting angle adjusting treatment is such that the reflecting plate bends in a direction in which the more distant the said reflecting plate is from the light source, the nearer it approaches the object of illumination; and a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

In the aforementioned configuration, uniformity of illumination is further improved by bending of the reflecting plate as well as by a change in angle of the micro-projections.

The invention of the claim 35 provides an illuminating unit according to the claim 23, wherein the reflecting angle adjusting treatment is such that the reflecting plate bends in a direction in which the more distant the said reflecting plate is from the light source, the nearer it approaches the object of illumination and a number of the micro-projections each having a slant surface reflecting the incident light from the light source are formed on the reflecting plate; and these micro-projections are arranged so that the distribution density thereof becomes gradually larger accordingly as the distance from the light source becomes longer.

In the aforementioned configuration, uniformity of illumination is further improved by bending the reflecting plate as well as by a change in distribution density of the micro-projections.

The invention of the claim 36 provides an illuminating unit according to the claim 24, wherein the reflecting angle adjusting treatment is such that the reflecting plate bends in a direction in which the more distant the said reflecting plate is from the light source, the nearer it approaches the object of illumination; and a number of the micro-projections each having a slant surface reflecting the incident light from the light source are formed on the reflecting plate; and these micro-projections are arranged so that the distribution density thereof becomes gradually larger accordingly as the distance from the light source becomes longer.

In the aforementioned configuration, uniformity of illumination is further improved by bending of the reflecting plate as well as by a change in distribution density of the micro-projections.

The invention of the claim 37 provides an illuminating unit according to the claim 21, wherein the illuminating unit has optical means which directs the light from the light source substantially in parallel to the reflecting plate.

In the above-mentioned configuration, parallelism of the irradiated light beams onto the reflecting plate is increased, whereby uniformity of the illumination is improved.

The invention of the claim 38 provides an illuminating unit according to the claim 22, wherein the illuminating unit has optical means which directs the light from the light source substantially in parallel to the reflecting plate.

In the above-mentioned configuration, parallelism of the irradiated light beams onto the reflecting plate is increased, whereby uniformity of the illumination is improved.

The invention of the claim 39 provides an illuminating unit according to the claim 37, wherein a diffusing plate is provided in front of the object of illumination.

In the configuration described above, the light reflected from the reflecting plate is diffused during passage through the diffusing plate, thus achieving uniformity of distribution of the light, resulting in uniformity of the illumination.

The invention of the claim 40 provides an illuminating unit according to the claim 38, wherein a diffusing plate is provided in front of the said object of illumination.

In the configuration described above, the light reflected from the reflecting plate is diffused during passage through the diffusing plate, thus achieving uniformity of distribution of the light, resulting in uniformity of the illumination.

The invention of the claim 41 provides a display unit built by use of an illuminating unit according to the claim 21, wherein a reflecting type liquid crystal display panel is arranged as an object of illumination.

In the above-mentioned configuration, it is possible to achieve a smaller thickness and a reduced weight of the illuminating unit, thus permitting construction of a display unit achieving a smaller thickness and a reduced weight for the display unit as a whole.

The invention of the claim 42 provides a display unit built by use of the illuminating unit according to the claim 22, wherein a reflecting type liquid crystal display panel is arranged as an object of illumination.

In the above-mentioned configuration, it is possible to achieve a smaller thickness and a reduced weight of the illuminating unit, thus permitting construction of a display unit achieving a smaller thickness and a reduced weight for the display unit as a whole.

The invention of the claim 43 provides a display unit built by use of the illuminating unit according to the claim 21, wherein a reflecting-type liquid crystal display panel is arranged as an object of illumination on the surface side of the reflecting plate of the illuminating unit; and the liquid crystal display panel is a liquid crystal display panel of the diffusion display mode in which the mode is switched over between a transmissive state and a diffusion state on the basis of the presence or absence of impression of a voltage.

In the configuration described above, a diagonal light having a high parallelism is irradiated onto the liquid crystal display panel. When the liquid crystal display panel is in a transmissive state (dark state), therefore, the light reaching an observer is reduced as far as possible. As a result, there is available a display unit of an improved contrast.

The invention of the claim 44 provides a display unit using the illuminating unit according to the claim 22, wherein a reflecting-type liquid crystal display panel is arranged as an object of illumination on the surface side of the reflecting plate of the illuminating unit; and the liquid crystal display panel is a liquid crystal display panel of the diffusion display mode in which the mode is switched over between a transmissive state and a diffusion state on the basis of the presence or absence of impression of a voltage.

In the configuration described above, a diagonal light having a high parallelism is irradiated onto the liquid crystal display panel. When the liquid crystal display panel is in a transmissive state (dark state), therefore, the light reaching an observer is reduced as far as possible. As a result, there is available a display unit of an improved contrast.

Brief Description of the Drawings

Fig. 1 is a simplified configuration diagram of a display unit of an embodiment 1 of the present invention;
Fig. 2 is a perspective view of an illuminating unit provided in the display unit of the embodiment 1 of the invention;
Fig. 3 illustrates a curved state of the reflecting plate 8;
Fig. 4 is a graph showing the relationship between the panel size and weight for the conventional art and the invention;

Fig. 5 is a partial configuration diagram of an illuminating unit of an embodiment 2 of the invention;

Fig. 6 is a side view of a reflecting plate 8a used in the embodiment 2 of the invention;

Fig. 7 is a plan view of the reflecting plate 8a used in the embodiment 2 of the invention;

Fig. 8 is a side view of a reflecting plate 8b used in the embodiment 2 of the invention;

Fig. 9 is a side view of a reflecting plate 8g used in the embodiment 2 of the invention;

Fig. 10 illustrates a variant of micro-projections 15;

Fig. 11 is a side view of a reflecting plate 8c used in an embodiment 3 of the invention;

Fig. 12 is a partial configuration diagram of a display unit of an embodiment 4 of the invention;

Fig. 13 illustrates the display principle of diffused liquid crystal;

Fig. 14 is a partial configuration diagram of a display unit of an embodiment 5 of the invention;

Fig. 15 is a partial configuration diagram of a display unit of an embodiment 6 of the invention;

Fig. 16 is a partial configuration diagram of a display unit of an embodiment 7 of the invention;

Fig. 17 is a partial configuration diagram of a display unit of an embodiment 8 of the invention;

Fig. 18 is a perspective view illustrating an overall exterior configuration of the display unit of the embodiment 8 of the invention;

Fig. 19 is a partial configuration diagram of the display unit of an example 7 of the invention;

Fig. 20 is a perspective view illustrating an overall exterior configuration of a display unit of an embodiment 9 of the invention;

Fig. 21 is a partial configuration diagram of a display unit of an embodiment 10 of the invention;

Fig. 22 is a configuration diagram of a conventional example of a backlight-type illuminating unit;

Fig. 23 is a partial configuration diagram of a conventional example of an illuminating unit for a diffusion type liquid crystal display panel; and

Fig. 24 is a configuration diagram of a conventional example of a front light illuminating unit.

Best Mode for Carrying Out the Invention

Embodiments of the present invention will now be described with reference to the drawings.

(Embodiment 1)

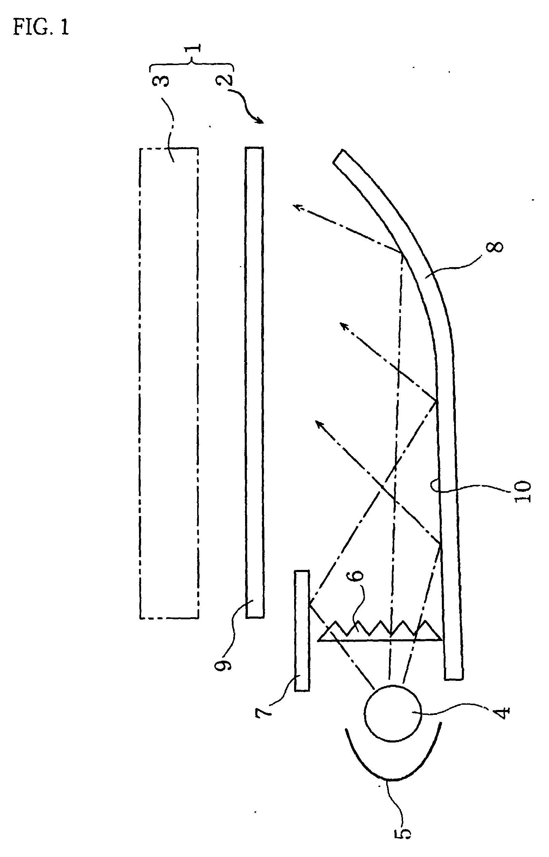

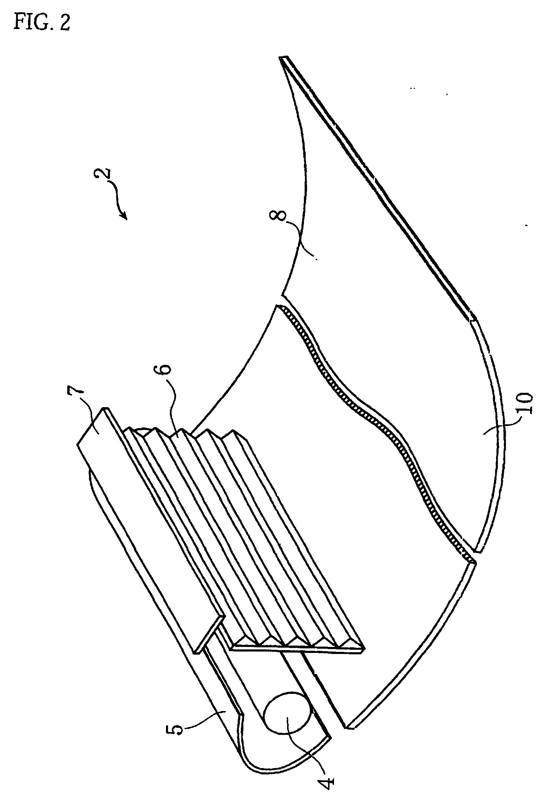

Fig. 1 is a simplified configuration diagram of an embodiment 1 of the present invention; and Fig. 2 is a perspective view of an illuminating unit provided in a display unit. This embodiment 1 is a case where the invention is applied to a transmissive-type display unit. The display unit 1 comprises a backlight-type illuminating unit 2 and a liquid crystal display panel 3 serving as an object of illumination. The liquid crystal display panel 3 is a TN (twisted nematic) type or STN (super-twisted nematic) type liquid crystal display panel. The illuminating unit 2 comprises a linear light source 4 such as a fluorescent tube, a condensing cover 5 which surrounds the rear portion of the light source 4 (the left side portion of Fig. 1), and condenses the light from the light source 4 onto the front side (right side portion in Fig. 1), a prism sheet 6 arranged in the proximity of the light source 4, an auxiliary reflecting plate 7 arranged in the proximity of, and above the prism sheet 6, a thin sheet-shaped reflecting plate 8 covering the entire back side (bottom portion in Fig. 1) of the liquid crystal display panel 3 serving as an object of illumination, and a diffusing plate 9 arranged between the reflecting plate 8 and the liquid crystal display panel 3.

The prism sheet 6 functions to convert the light from the light source 4 into a parallel light. A micro-lens sheet may therefore be used in place of the prism sheet 6.

Further, the auxiliary reflecting plate 7 shields the light irradiated from the light source 4 directly to the liquid crystal display panel 3, and directs it to the reflecting plate 8 to shield irradiation of the light having a high optical intensity onto the liquid crystal display panel 3, thus serving to improve uniformity of the light onto the liquid crystal display panel 3.

Further, the reflecting plate 8 is bent in a parabola shape so as to approach the liquid crystal display panel 3 substantially according as the distance from the light source 4 becomes longer. By bending the reflecting plate 8 into a parabola shape as described above, it is possible to irradiate the liquid crystal display panel 3 substantially uniformly. In general, light attenuates according as the distance from the light source 4 becomes longer. When light is irradiated onto the liquid crystal display panel 3 by use of a flat-shaped reflecting plate not bent, therefore, the optical intensity is higher at an end (left side end in Fig. 1) of the liquid crystal display panel 3 on the light source 4 side, whereas the optical intensity is lower at the other end (right side end in Fig. 1) of the liquid crystal display panel 3, thus making it impossible to irradiate the reflecting plate uniformly, and causing occurrence of display non-uniformity. In this respect, it is possible to gradually increase the degree of condensation of the light directed toward the liquid crystal display panel 3 according as the distance from the light source becomes longer by using a reflecting plate 8 having the above-mentioned shape. As a result, the degree of condensation is small, in spite of a high optical intensity at portions of the liquid crystal display panel 3 closer to the light source, and in contrast, the degree of condensation become higher, with a lower optical intensity, at portions distant from the light source. Therefore, for illumination of the liquid crystal display panel 3 as a whole, the illuminating light is averaged, thus permitting substantially uniform illumination of the liquid crystal display panel. It is thus possible to prevent display non-uniformity caused by the attenuation of the quantity of light occurring according as the distance from the light source 4 of the liquid crystal display panel becomes longer.

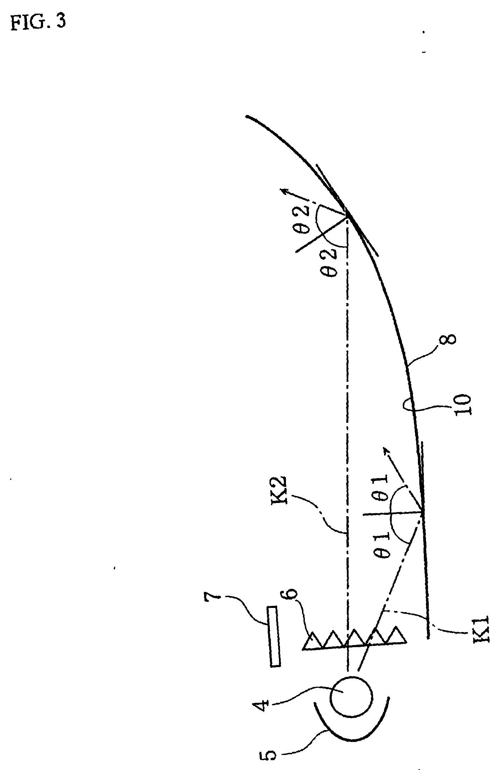

The parabolic shape of the reflecting plate 8 suffices to be at least a shape approaching the liquid crystal display panel 3 according as the distance from the light source 4 becomes longer. However, it should preferably be bent so that the incident angle of the incident light from the Light source 4 onto the reflecting surface is substantially constant over the entire reflecting surface 10. In other words, in a case using incident lights K1 and K2 arbitrarily selected as shown in Fig. 3, if the incident angle of the incident light K1 is θ1 and the incident angle of the other incident light K2 is θ2, it is desirable that the reflecting plate 8 has a curved shape satisfying θ1 ≒ θ2 at an arbitrary position on the reflecting surface 10. Since a better balance between the optical intensity and the degree of condensation is available for the illuminating light onto the liquid crystal display panel 3, it is possible to improve uniformity of the illumination.

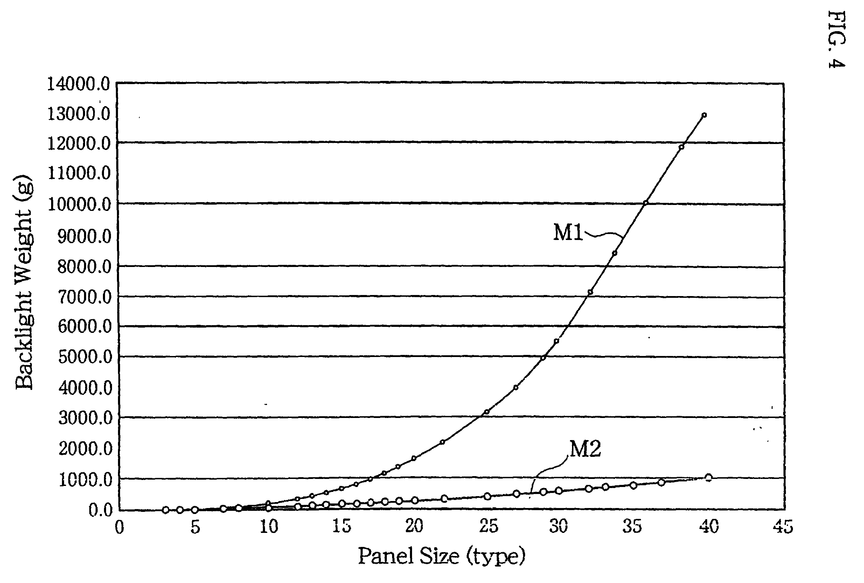

By using the illuminating unit of this embodiment, as compared with use of a conventional case using a light guide plate, it is possible to achieve a reduced weight and a smaller size of the unit as a whole. This is useful particularly in a display unit using a large-sized display panel. The reason will be described with reference to Fig.4. In Fig. 4, the abscissa represents the panel size (shown by diagonal inches), and the ordinate, the backlight weight. In Fig. 4, the line M1 represents the case of a conventional illuminating unit using a light guide plate, and the line M2 shows the case of the illuminating unit of the present invention. The weight of the light guide plate is calculated on the basis of the following formula. The specific gravity 1.1 of acrylic resin commonly employed is used as that of the light guide plate.

Light guide plate = (light guide plate thickness) x (area of light guide plate) x (specific gravity of light guide plate)

As is clear from Fig.4, a larger panel size corresponds to an increased weight in the conventional art. In the invention, in contrast, an increased size leads to almost no increase in weight. The reason is as follows. In general, in order to keep a constant brightness of liquid crystal display, it is necessary to use thicker fluorescent tubes according as the panel size becomes larger. The emitted luminous flux is proportional to a square of the tube diameter, and therefore, also to a square of the distance from the fluorescent tube. Under the conditions of keeping a constant brightness of the liquid crystal display panel, therefore, the panel size is in a linear proportional relationship with the tube diameter. For this reason, in the conventional art, a larger tube diameter leads to a larger light guide plate and an increased weight. In the present invention using a reflecting plate, in contrast, the weight increase depending upon the panel size is slight, because an air layer occupies the most part. This effect becomes apparent for a panel size of at least type 10, and becomes more remarkable for a panel size of over type 15.

The effect of eliminating the light guide plate, as described above, applies also to any of the embodiments 2 to 9 described later.

[Experiment Example 1]

The present inventor prepared a display unit having a backlight as described above to observe display property. First, aluminum was vapor-deposited on an acryl plate by sputtering to manufacture an ordinary thin flat sheet-shaped reflecting plate not subjected to a micro-processing. Then, the resultant flat sheet-shaped reflecting plate was bent into a parabolic-shaped reflecting plate 8. Then, an illuminating unit was prepared by assembling the reflecting plate 8, a light source 4, a condensing cover 5, a prism sheet 6, and an auxiliary reflecting plate 7. Then, a display unit 1 was manufactured by mounting an illuminating unit 2 and a liquid crystal display panel 3. The display status of the thus manufactured display unit 1 was observed: luminance non-uniformity was not observed and uniform display was obtained. By providing a diffusing plate 9 behind the liquid crystal display panel 3, more uniform display was obtained.

(Embodiment 2)

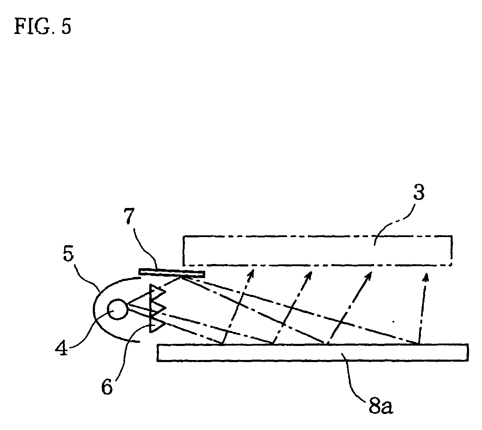

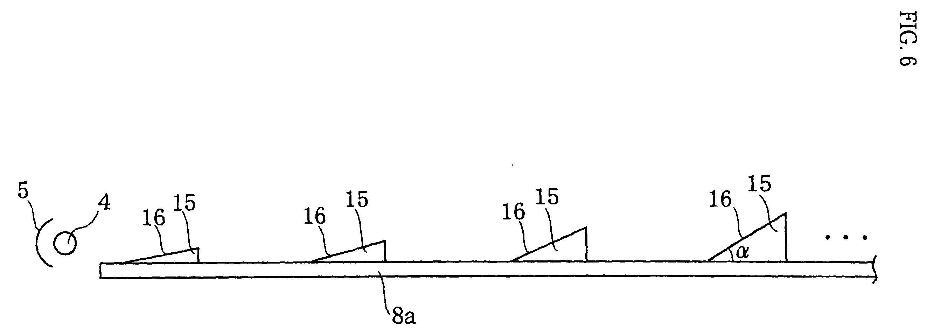

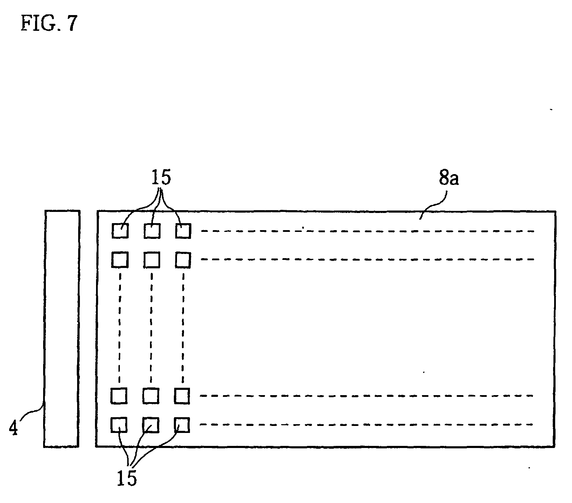

Fig. 5 is a partial configuration diagram of a display unit of an embodiment 2 of the invention; Fig. 6 is a side view of a reflecting plate used in the embodiment 2; and Fig. 7 is a plan view of the reflecting plate used in the embodiment 2. The embodiment 2 is similar to the embodiment 1, and corresponding component parts are represented by the same reference numerals, omitting a detailed description thereof. In Fig.5, the micro-projections 15 are omitted to facilitate explanation with the drawing.

In the embodiment 2, a flat sheet-shaped reflecting plate 8a not bent is used in place of the reflecting plate 8 in the embodiment 1. Many micro-projections 15 for adjusting the reflecting angle are formed on the reflecting surface 10 of this reflecting plate 8a. Each of the micro-projections 15 has slant surface 16 reflecting an incident light from the light source. These micro-projections 15 are arranged so that the inclination angle þ of the slant surface 16 becomes larger according as the distance from the light source 4 becomes longer. By providing these micro-projections 15, it is possible to gradually increase the degree of condensation of the light irradiated toward the liquid crystal display panel 3 according as the distance from the light source 4 becomes longer. Therefore, even with the flat sheet-shaped reflecting plate not bent, it is possible to substantially uniformly illuminate the liquid crystal display panel 3 as in the parabolic reflecting plate 8 of the aforementioned embodiment 1 by providing the micro-projections.

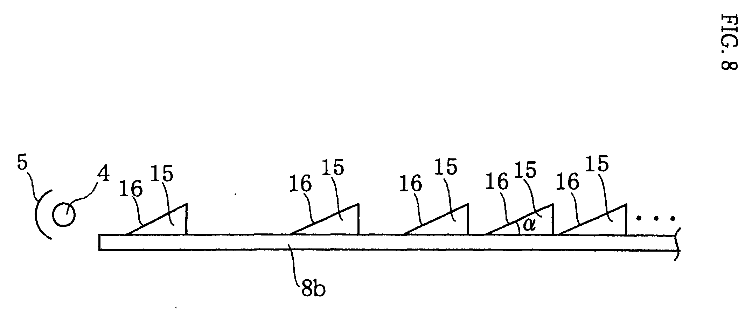

In place of arranging the micro-projections 15 so that the inclination angle $\alpha$ of the slant surface 16 becomes larger according as the distance from the light source 4 becomes longer, a reflecting plate 8b on which micro-projections 15 are arranged as shown in Fig. 8 so that the distribution density on the reflecting plate surface becomes gradually larger according as the distance from the light source 4 becomes longer may be used. It is particularly desirable to arrange the micro-projections 15 so as to obtain a quantity of light as represented by a distribution density corresponding to a square of the distance from the light source 4. More specifically, if the distribution density of the micro-projections with a distance L1 from the light source 4 is S1, and the distribution density of the micro-projections 15 with a distance L2 from the light source 4 is S2, it is desirable to arrange the micro-projections 15 so as to satisfy $(L1/L2)^2 = S1/S2$. By this arrangement, it is possible to further improve uniformity of illumination.

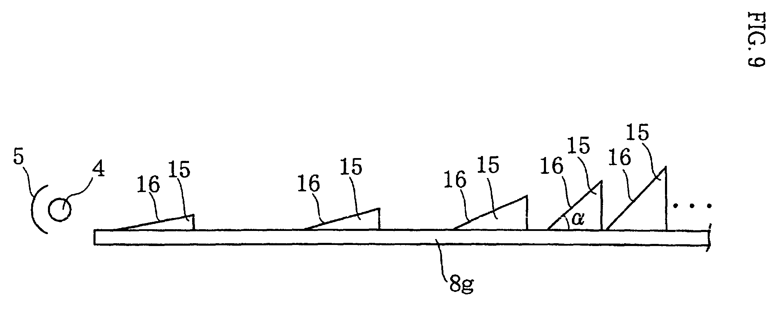

Furthermore, it is also possible to use a reflecting plate 8 of a configuration based on combination of the above-mentioned inclination angle of the micro-projections 15 and the distribution density of the micro-projections 15 as shown in Fig.9.

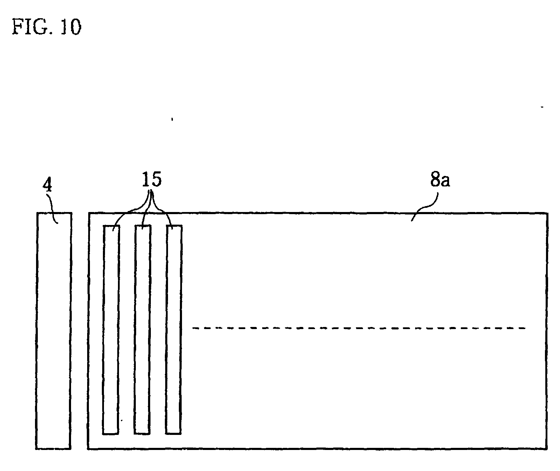

The micro-projections 15 may be scattered points as shown in Fig.7, or may be linear shape extending in parallel with the light source 4 as shown in Fig. 10. The micro-projections 15 are not limited to the rectangular shape as shown in Figs.7 and 10, but may also be triangular or circular in horizontal cross-section.

[Experiment Example 2]

The present inventor prepared the aforementioned display unit having a backlight as follows, and observed the display property. First, micro-projections were formed by subjecting an acryl plate to a micro-processing. At this point, the inclination angle $\alpha$ of the micro-projections 15 at the position the closest to the light source 4 was set to 0°; the inclination angle $\alpha$ of the micro-projections 15 at the most distant position was set to 30°; and the inclination angle $\alpha$ of the micro-projections 15 located therebetween were set so as to achieve an angle distribution giving the quantities of light proportional to a square of the distance from the light source 4. The size of a micro-projections 15 was set at 100 $\mu$ pitch smaller than a pixel. Then, a reflecting plate 8a was prepared by vapor-depositing aluminum by sputtering onto the acryl plate having the micro-projections 15 formed thereon. Then, an illuminating unit was manufactured by assembling the reflecting plate 8a, a light source 4, a condensing cover 5, a prism sheet 6, and an auxiliary reflecting plate 7. Then, a display unit 1 was manufactured by mounting an illuminating unit 2 and a liquid crystal display panel 3. The display status of the thus manufactured display unit 1 was observed: no luminance non-uniformity was observed and uniform display was obtained. More uniform display was obtained by providing a diffusing plate 9 behind the liquid crystal display panel 3.

The manufacturing method of the reflecting plate 8a is not limited to the above, but acryl resin may be pressed, or subjected to mold injection. Aluminum may be press-processed, or a photosensitive resin may be photo-etched.

(Embodiment 3)

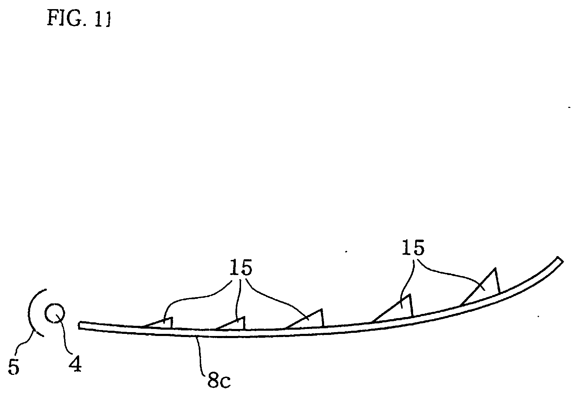

A reflecting plate 8c shown in Fig. 11 may be used. More specifically, the reflecting plate 8c bent into a parabolic shape and having micro-projections 15 formed thereon may be used. Use of such a reflecting plate 8c permits improvement of uniformity of the illuminating light onto the liquid crystal display panel through reflection at an appropriate angle by the simultaneous use of the curved state of the reflecting plate and the micro-projections 15.

The following more concrete configurations are conceivable: (1) a curved state of the reflecting plate and the inclination angle $\alpha$ of the micro-projections 15; and (2) a curved state of the reflecting plate and the distribution density of the micro-projections 15.

[Experiment Example 3]

The present inventor manufactured a display unit 1 in the same manner as in the experiment example 2 except that the reflecting plate 8a prepared in the above-mentioned experiment example 2 was bent into a parabolic shape which was used as a reflecting plate 8c. The display property of the thus manufactured display unit 1 was observed: no luminance non-uniformity was observed, and uniform display was obtained. More uniform display was obtained by providing a diffusing plate 9 behind the liquid crystal display panel 3.

For the above display unit 1, the degree of parallelism was reduced by removing the prism sheet 6: uniformity was somewhat deteriorated and luminance non-uniformity was observed.

(Embodiment 4)

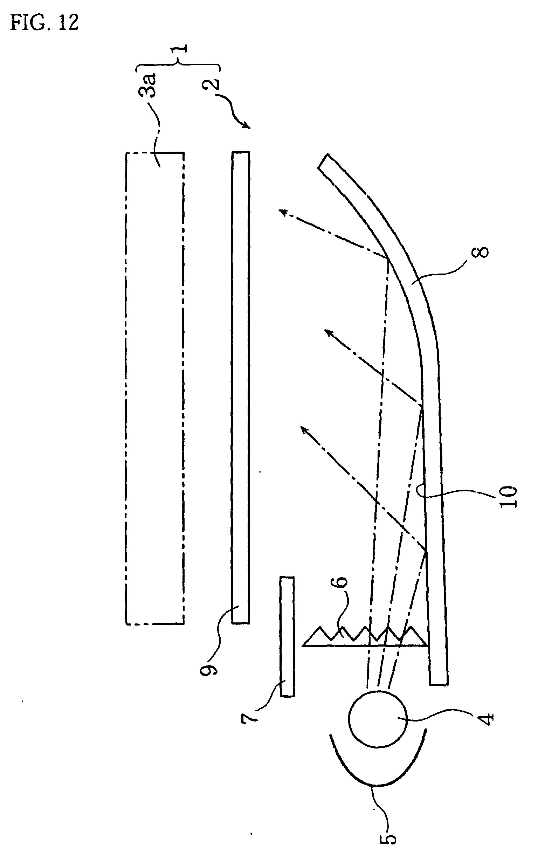

Fig. 12 is a partial configurational view of a display unit of an embodiment 4 of the invention. The embodiment 4 is similar to the embodiment 1, and corresponding component parts are represented by the same reference numerals, omitting a detailed description thereof. While the above-mentioned embodiment 1 has covered a TN (twisted nematic) type or STN (super-twisted nematic) type liquid crystal display panel 3, a scattering type liquid crystal display panel 3a is used in the embodiment 4. The term the diffusing type liquid crystal display panel means a panel conducting display by switching the mode between a transmissive (transparent) state and a diffusion (white muddy) state on the basis of presence or absence of impression of a voltage, including, for example, a liquid crystal display panel using a polymer dispersing type liquid crystal in which liquid crystal drops are dispersed in a polymer, a dynamic type liquid crystal, or a smectic liquid crystal of a heat write diffusion mode.

The reflecting plate in this embodiment takes the shape of a parabola as in the reflecting plate in the embodiment 1, with however a different curve shape of the parabola from that in the embodiment 1. In the embodiment 1, more specifically, the curvature of the reflecting plate has been set for the purpose of gradually increasing the degree of condensation of the light directed toward the liquid crystal display panel 3 accordingly as the distance from the light source becomes longer. The reflecting plate in this embodiment differs from that in the embodiment 1 in that the curvature of the reflecting plate is set so that light beams reflected at any arbitrary position on the reflecting surface are in parallel with each other. In this embodiment, in which a diffusion type liquid crystal display panel 3a is used, it is necessary to irradiate highly parallel diagonal light onto the liquid crystal display panel 3a.

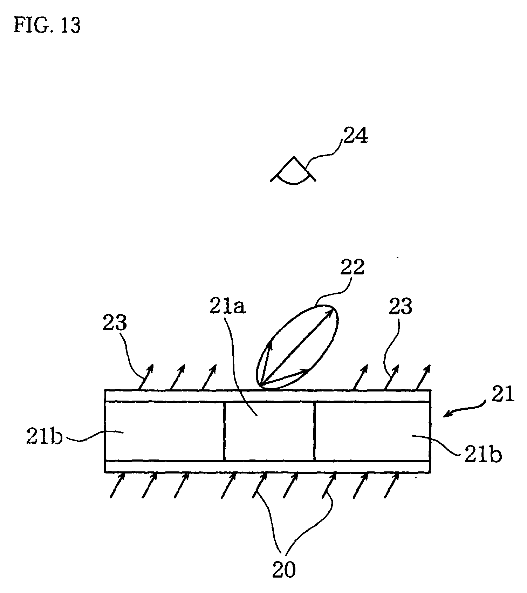

The reason will be described in detail. With reference to Fig. 13, the principle of display upon diagonal incidence is as follows. The light 20 entering a diffusing plate 21 from the light source becomes a diffused light 22 in a diffused state portion 21a, and becomes a transmitting light 23 without being diffused in a transmissive state portion 21b. At this point, the observer 24 is in a bright state during diffusion as a result of arrival of the light at the transmissive state portion 21b, and in a dark state during transmission when the light leaves there, thus permitting display of a bright or dark state. As is evident from this principle, when the light from the light source is originally a diffused light, it keeps the state of diffused light during transmission, and the light reaches in the direction of observation, resulting in a lower contrast between bright and dark states. It is desirable that the light from the light source is a parallel light to some extent.

In an ordinary TN (twisted nematic) type liquid crystal, a diffusing plate is provided between the light source and the liquid crystal display panel with a view to achieving uniformity of the light from the backlight. However, in the scattering type display mode, this causes a decrease in contrast, and forms a factor of deteriorating the display quality. For this reason, it is desirable to omit the diffusing plate when using a scattering type liquid crystal display panel.

As a reflecting plate, any of the reflecting plate 8a, the reflecting plate 8b and the reflecting plate 8c may be used in place of the reflecting plate 8. In this embodiment, however, it is necessary to set an inclination angle þ or a distribution density of the micro-projections 15 from the point of view of irradiating a diagonal light having a high parallelism, in addition to improving uniformity of illumination.

[Experiment Example 4]

The present inventor prepared a display unit 1 having a backlight as described above as follows, and observed the display property. First, a scattering type liquid crystal display panel 3a was prepared. More specifically, a vacant panel (cell thickness: 4 μm) using a TFT substrate was manufactured by a known manufacturing method. A scattering liquid crystal PN201 (commercial product name) made by Dainihon Ink Co., Ltd. was sealed in the above-mentioned vacant panel by the vacuum injecting method. Then, ultraviolet rays were irradiated from a high-pressure mercury lamp at an intensity of 20 mW/cm$^2$ (around 360 nm) for 120 seconds onto the panel containing the liquid crystal sealed therein, thereby preparing a liquid crystal display panel 3a of a polymer network structure.

Then, a flat sheet-shaped reflecting plate was fabricated into a parabolic shape (corresponding to the reflecting plate 8) in the same manner as in the Experiment Example 1. The parabolic shape of the reflecting plate at this point was set so that the light incident angle to the scattering liquid crystal display panel 3a is at least 30þ. Then, an illuminating unit 2 was manufactured by assembling the aforementioned parabola-shaped reflecting plate, a light source 4, a condensing cover 5, a prism sheet 6, and an auxiliary reflecting plate 7. Then, a display unit 1 was manufactured by mounting the illuminating unit 2 and the liquid crystal display panel 3a. The display status of the thus manufactured display unit 1 was observed under conditions including a main visual angle of 30° from a perpendicular line of the liquid crystal display panel 3a: there was only a little luminance non-uniformity, and a contrast over 20 was obtained. The scattering liquid crystal is not limited to the liquid crystal of the polymer structure, but may be a polymer dispersion liquid crystal, and similar effects was obtained.

[Experiment Example 5]

A liquid crystal display unit was manufactured in the same manner as in the Experiment Example 4 by use of a micro-processed reflecting plate 8a as in the Experiment Example 2. The shape of the micro-projections 15 was set so that the incident angle of the light to the scattering liquid crystal display panel is at least 30°. The main visual angle was set to 30° from the perpendicular line of the liquid crystal display panel 3. Display was tested for the thus manufactured liquid crystal display unit: there was only a little luminance non-uniformity, and a contrast of over 20 was obtained.

[Experiment Example 6]

The reflecting plate 8a prepared in the Experiment Example 5 was bent into a parabolic shape (corresponding to the reflecting plate 8c). An illuminating unit was manufactured by the same method as in the Experiment Example 5, except for the above. Luminance uniformity was observed for this liquid crystal display unit: a more uniform display was obtained. A contrast of at least 20 was obtained.

[Comparative Example 1]

For the scattering type liquid crystal display units of the Experiment Examples 4, 5 and 6, a diffusing plate 9 was inserted between the liquid crystal display panel 3a and the reflecting plate: this caused a large decrease to 2 of contrast, leading to deterioration of the display quality. The prism sheet 6 was removed to reduce the degree of parallelism of the light from the light source 4, and contrast partially decreased to about 8.

(Embodiment 5)

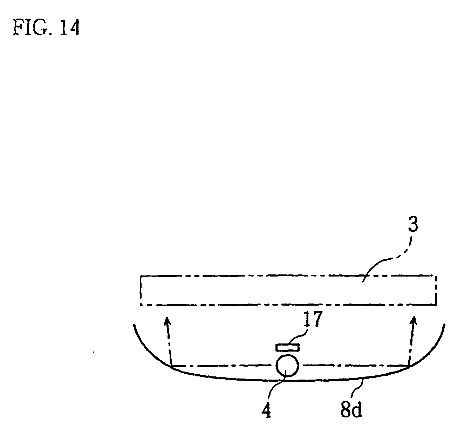

Fig. 14 is a partial configuration diagram of a display unit of the embodiment 5. In this embodiment 5, a light source 4 is arranged near the center of a reflecting plate 8d and above the reflecting surface, and is bent into a parabolic shape so as to be closer to the liquid crystal display panel 3 according as the distance from the light source 4 becomes longer. In this reflecting plate 8d, micro-projections 15 are not formed on the reflecting surface as in the embodiment 1. In such a configuration in which the light source 4 is arranged near the center of the reflecting plate 8d, the area occupied by the reflecting plate is a half that in the case where the reflecting plate is bent, even with the same panel area, thus bringing about the effect of reducing the thickness of the display unit as a whole. This coincides with the case of the embodiments 6 and 7 described later.

When the light source 4 is arranged near the center, the light shield 17 may be provided to prevent the light from the light source 4 from entering directly into the liquid crystal display panel 3. This permits improvement of the uniformity of illumination.

While the liquid crystal panel 3 has been used in the above-mentioned case, the scattering type liquid crystal display panel 3a may be used.

The reflecting plate 8d has been bent into a parabolic shape in the case described above. The present invention is not however limited to this, but the reflecting plate 8d suffices to be bent in a direction approaching the liquid crystal display panel 3 according as the distance from the light source 4 becomes longer. While the reflecting plate 8d has been used in the above-mentioned case, a reflecting plate of any of the following configurations may be used in place of the reflecting plate 8d:

(1) A reflecting plate arranged so that the inclination angle $\alpha$ of the slant surface 16 gradually becomes larger accordingly as the distance from the light source 4 becomes longer as in the reflecting plate 8a may be used.
(2) A reflecting plate arranged so that the distribution density of the micro-projections 15 becomes gradually larger accordingly as the distance from the light source 4 becomes longer as in the reflecting plate 8b may be used.
(3) A reflecting plate having a configuration based on a combination of the inclination angle and the distribution density of the micro-projections 15 as in the reflecting plate 8g may be used.
(4) A reflecting plate having a configuration based on a combination of the curvature of the reflecting plate and the inclination angle $\alpha$ of the micro-projections 15 as in the reflecting plate 8c, or a configuration based on a combination of the curvature of the reflecting plate and the distribution density of the micro-projections 15 may be used.

(Embodiment 6)

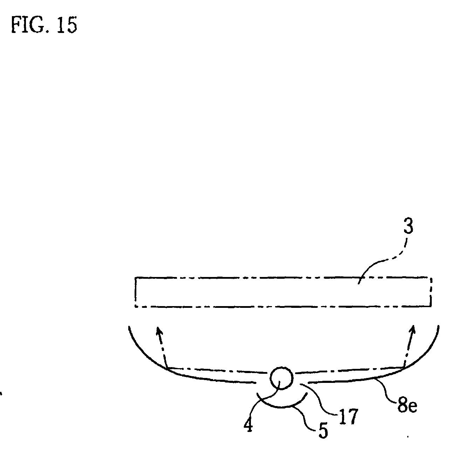

Fig.15 is a partial configuration diagram of a display unit of the embodiment 6 of the invention. In this embodiment 6, the reflecting plate 8e is used. In this reflecting plate 8c, the transmission hole 17 of a rectangular shape is formed near the center of the reflecting surface, and the light source 4 is provided in this transmission hole 17. The condensing cover 5 is provided behind (bottom side in Fig. 15) the light source 4. The micro-projections 15 are not formed on the reflecting surface as in the reflecting plate 8 in the Embodiment 1. The reflecting plate 8d is bent into a parabolic shape so that it comes closer to the liquid crystal display panel 3 accordingly as the distance from the light source 4 substantially becomes longer. This configuration permits achievement of a smaller thickness of the display unit as in the Embodiment 5.

The transmission hole 17 is circular, and point-shaped light sources may be used in place of the linear light source 4. Further, a configuration in which the light source 4 is arranged between two reflecting plates may be used in place of the configuration in which the transmission hole 17 is formed in a single reflecting plate.

The light shield 17 may be provided directly above the light source 4 in the Embodiment 5.

While a liquid crystal display panel 3 has been used in the case described above, the scattering type liquid crystal display panel 3a may be used.

The reflecting plate 8e has been bent into a parabolic shape in the above-mentioned case. The present invention is not however limited to this, but the reflecting plate 8e suffices to be bent in a direction, approaching the liquid crystal display panel 3 accordingly as the distance from the light source 4 becomes longer. While the reflecting plate 8e has been used in the above-mentioned case, a reflecting plate having the following configuration may be used in place of the reflecting plate 8e:

(1) A reflecting plate, that is arranged in such a manner that the inclination angle $\alpha$ of the slant surface 16 gradually becomes larger accordingly as the distance from the light source becomes longer as in the reflecting plate 8a, may be used.
(2) A reflecting plate, arranged in such a manner that the distribution density of the micro-provisions 15 becomes gradually larger accordingly as the distance from the light source becomes longer as in the reflecting plate 8b, may be used.
(3) A reflecting plate, which has a configuration based on a combination of the inclination angle and the distribution density of the micro-projections 15 as in the reflecting plate 8g, may be used.
(4) A reflecting plate, which has a configuration based on a combination of the curvature of the reflecting plate and the inclination angle $\alpha$ of the micro-projections 15 as in the reflecting plate 8c, or a configuration based on a combination of the curvature of the reflecting plate and the distribution density of the micro-projections 15, may be used.

(Embodiment 7)

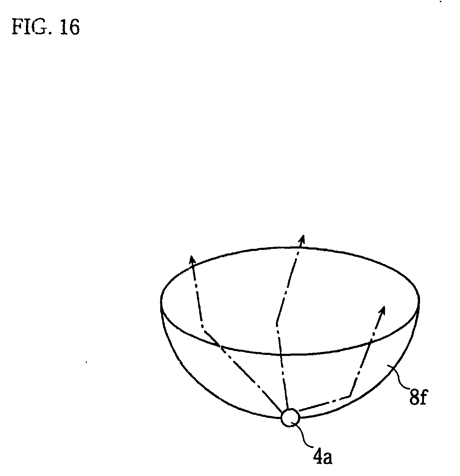

The reflecting plate 8f shown in Fig. 16 is employed in an Embodiment 7 of the invention. This reflecting plate 8f is formed into a bowl shape and has point light sources 4a arranged on the bottom thereof. With the reflecting plate 8f having the above-mentioned configuration, it is possible to achieve a smaller thickness of the display unit as in the aforementioned Embodiments 5 and 6.

While the liquid crystal display panel 3 has been used in the case mentioned above, the scattering type liquid crystal display panel 3a may be used.

The reflecting plate 8f not micro-processed has been used in the above-mentioned case, but a reflecting plate having micro-projections 15 formed on the reflecting surface may be used. Arrangement of the micro-projections 15 in this case suffices to comply with the inclination angle $\alpha$ or the distribution density as in the above-mentioned reflecting plate 8a or 8b.

Further, the illuminating unit using the bowl-shaped reflecting plate 8f as described above is applicable not only to an illuminating unit for a liquid crystal display panel, but also to the other illuminating unites, and particularly to a case where the surface to be illuminated of the object of illumination is circular.

(Embodiment 8)

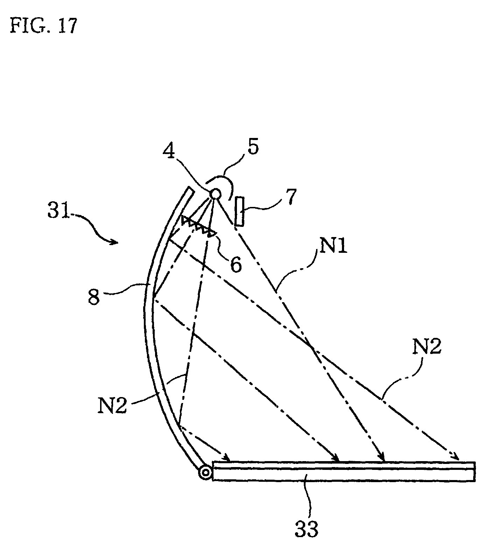

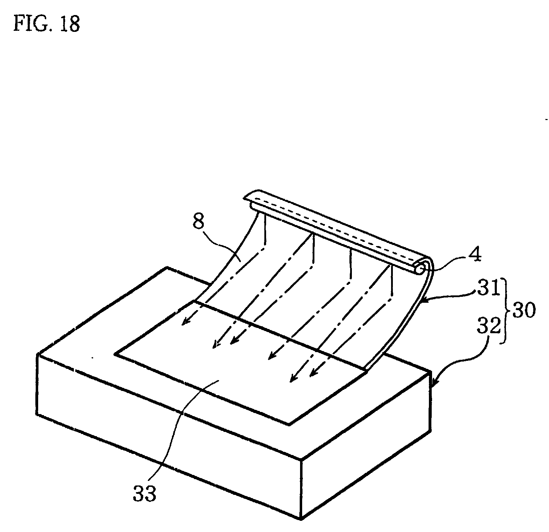

Fig.17 is a partial configuration diagram of a display unit of an embodiment 8 of the invention; and Fig. 18 is a perspective view illustrating a whole view of the display unit. In this Embodiment 8, the invention is applied to a reflection type display unit. This display unit 30 comprises the front type illuminating unit 31, and the display unit body 32 having a reflection type liquid crystal display panel 33. The illuminating unit 31 has basically the same configuration as that of the Backlight-type illuminating unit 2, and the same reference numerals are assigned to corresponding component parts. In this front-type illuminating, unit 31, a base end of the reflecting plate 8 is attached to the display unit body 32 so as to permit adjustment of the angle, and the light source 4 is integrally provided at a leading end of the reflecting plate 8. As a result, by setting the reflecting plate 8 to a wide-open state, it is possible to take a long distance between the light source 4 and the reflection type liquid crystal display panel 33. This causes a marked decrease in the difference in the optical path length between the light Nl irradiated from the light source 4 directly onto the reflection type liquid crystal display panel 33 and the light N2 irradiated onto the reflection type liquid crystal display panel 33 via the reflecting plate. Furthermore, the reflecting plate 8 is formed into a parabolic shape. Therefore, making the reflecting plate 8 angle-adjustable and forming it into a parabolic shape make it possible to achieve uniform illumination.

The reflecting plate 8 can serve as an opening/closing cover, thus permitting prevention of a damage to the display surface of the reflection-type liquid crystal display panel 33.

Any of the reflecting plates 8a, 8b, 8g, and 8c having the aforementioned micro-projections 15 may be used in place of the reflecting plate 8. The configuration, in which the light source is arranged near the center of the reflecting plate as in the Embodiments 5, 6, and 7, is applicable to this Embodiment 8 as well.

The reflection type liquid crystal display panel 33 may be an ordinary TN reflection-type liquid crystal display panel or a scattering-type liquid crystal display panel. When the reflection-type liquid crystal display panel 33 is an ordinary TN reflection-type liquid crystal display panel, the diffusing plate 9 may be provided in front of the reflection-type liquid crystal display panel 33. In this configuration, there is available a more uniform display. When the reflection type liquid crystal display panel 33 is a scattering-type liquid crystal display panel, the diffusing plate 9 is not provided. It is because installation of the diffusing plate 9 results in decrease in the contrast.

When using a scattering-type liquid crystal display panel, it is necessary to make it possible to irradiate a diagonal light having a high parallelism, as mentioned in the description of the backlight-type illuminating unit as to the curvature of the reflecting plate or the inclination angle and distribution density of the micro-projections.

[Experiment Example 7]

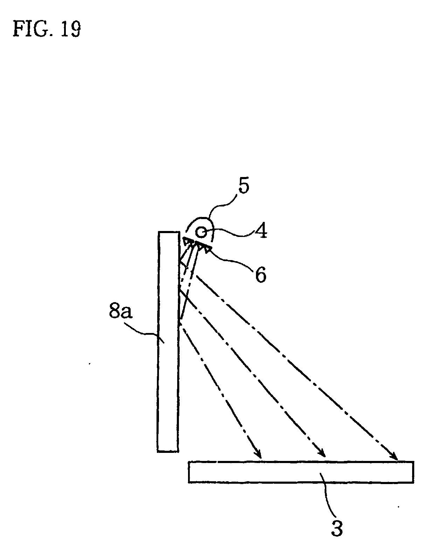

The present inventor manufactured a reflection type display unit 30 having the above-mentioned front type illuminating unit as follows, and observed the display property. In this Experiment Example 7, an ordinary TN reflection-type liquid crystal display panel was used as the reflection-type liquid crystal display panel 33, and the reflecting plate 8a was used as the reflecting plate. First, the micro-projections 15 were formed by micro-processing an acryl plate. At this time, the set angular distribution included an inclination angle $\alpha$ of the micro-projection 15 at the position the closest to the light source 4 of 0°, an inclination angle $\alpha$ of the micro-projection 15 at the farthest distant position of 30°, and each inclination angle $\alpha$ of the micro-projections 15 in the midway to give an amount of light proportional to substantially a square of the distance from the light source 4. The size of the micro-projections 15 was set, to 100 $\mu$m pitch, which is a smaller size than the size of a pixel. Then, the reflecting plate 8a was manufactured by vapor-depositing aluminum by sputtering on an acryl plate having the micro-projections 15 formed thereon. Then, an illuminating unit 31 was manufactured by assembling the reflecting plate 8a, the light source 4, the condensing cover 5, the prism sheet 6, and the auxiliary reflecting plate 7. Then, the display unit 30 shown in Fig. 19 was manufactured by mounting the illuminating unit 31 onto the display unit body 32 having the reflection type liquid crystal display panel 33. To simplify illustration, the micro-projections 15 are omitted in Fig.19.

The display status of the thus manufactured display unit 30 was observed: no luminance non-uniformity was observed, and a uniform display was obtained. By providing the diffusing plate 9 in front of the reflection-type liquid crystal display panel 33, a more uniform display was obtained.

[Experiment Example 8]

A display unit 30 was manufactured in the same manner as in the Experiment Example 7 except that the reflecting plate 8a manufactured in the Experiment Example 7 was bent into a parabolic shape (corresponding to the reflecting plate 8c). The display status was observed on the display unit 30 of this Experiment Example 8: luminance non-uniformity was not observed, and a uniform display was obtained. By providing the diffusing plate 9 in front of the reflection type liquid crystal display panel 33, a more uniform display was obtained.

[Experiment Example 9]

The display unit 30 was manufactured in the same manner as in the Experiment Example 8 except that an ordinary flat sheet-shaped reflecting plate not fine-processed was prepared, and the thus prepared flat sheet-shaped reflecting plate was bent into a parabolic shape (corresponding to the reflecting plate 8). The display status was observed on this display unit 30 of this Experiment Example 9: no luminance non-uniformity was observed, and a uniform display was obtained. By providing the diffusing plate 9 in front of the reflection type liquid crystal display panel 33, a more uniform display was obtained.

[Experiment Example 10]

In the Experiment Example 10, a TFT scattering liquid crystal display panel was used as the reflection type liquid crystal display panel 33, and the reflecting plate 8 was used as the reflecting plate. The TFT scattering liquid crystal display panel was manufactured in the same manner as in the above-mentioned Experiment Example 4. Curvature of the reflecting plate 8 was set to a parabolic shape so that the incident angle of the light to the scattering liquid crystal display panel is at least 30° as in the Experiment Example 4. The main visual angle was set to 30° from the perpendicular line of the scattering liquid crystal display panel. The display unit 30 was manufactured in the same manner as in the Experiment Example 7 for the other conditions of manufacture. The display status was observed on the display unit 30 of the Experiment Example 10: luminance non-uniformity was not observed, and a contrast of 20 or more was obtained.

[Experiment Example 11]

The liquid crystal display unit 30 was manufactured in the same manner as in the Experiment Example 10 by use of the reflecting plate 8a micro-processed in the same manner as in the Experiment Example 7. A shape of micro-projections was set so as to give an incident angle of the light to the scattering liquid crystal display panel of at least 30°. The display status of the display unit 30 of the Experiment Example 11 was observed: only a little luminance non-uniformity was observed, and a contrast of 20 or more was obtained.

[Experiment Example 12]

The reflecting plate 8a manufactured in the Experiment Example 11 was bent into a parabolic shape (corresponding to the reflecting plate 8c). The liquid crystal display unit 30 was manufactured in the same manner as in the Experiment Example 11 except for the above. The display status was observed for the display unit 30 of this Experiment Example 12, including observation of the luminance uniformity of this liquid crystal display unit: there was observed only a little luminance non-uniformity, and contrast of 20 or more was obtained.

[Comparative Example 2]

The diffusing plate 9 was inserted in front of the reflection-type liquid crystal display panel (scattering type liquid crystal display panel) 33 in each of the scattering type liquid crystal display units of the above-mentioned Experiment Examples 10, 11, and 12: there was a large decrease in contrast to 2, and the display quality has decreased. By reducing the parallelism of the light from the light source 4 by removing the prism sheet 6, the contrast partially decreased to about 8.

(Embodiment 9)

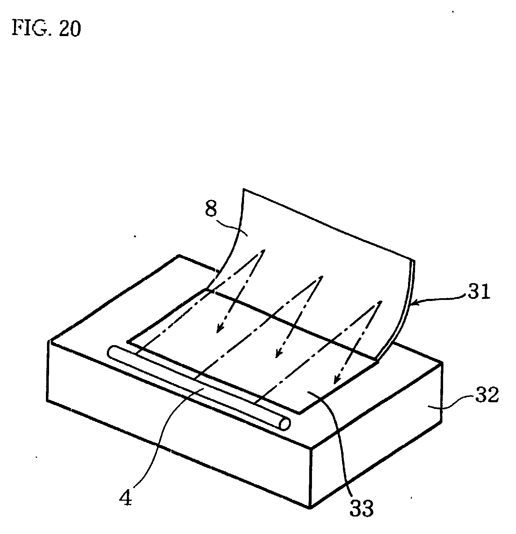

Fig.20 is a perspective view illustrating a whole exterior configuration of a display unit of the Embodiment 9. In this Embodiment 9, the light source 4 is provided on the display unit body 32 side. In this configuration, the optical path length of the light irradiated from the light source 4 via the reflecting plate 8 onto the liquid crystal display panel 33 is longer than in the Embodiment 5, resulting in a further smaller difference in the optical path length between the irradiated light beams. This brings about an advantage of improving the uniformity of illumination. In addition, provision of the light source 4 on the unit body side facilitates wiring, thus permitting simplification of the configuration of the reflecting plate serving as an opening/closing cover.

Also in the Embodiment 9, as in the above-mentioned Embodiment 8, any of the aforementioned reflecting plates 8a, 8b, 8g, and 8c having the micro-projections 15 provided thereon may be used in place of the reflecting plate 8.

The reflection type liquid crystal display panel 33 may be an ordinary TN reflection-type liquid crystal display panel, or a scattering-type liquid crystal display panel. When the reflection-type liquid crystal display panel 33 is an ordinary TN reflection-type liquid crystal display panel, the diffusing plate 9 may be provided in front of the reflection type liquid crystal display panel 33. This gives a more uniform display. When the reflection type liquid crystal display panel 33 is a scattering-type liquid crystal display panel, the diffusing plate 9 is not provided. Installation of the diffusing plate 9 will lead to decrease in the contrast.

[Embodiment 10]

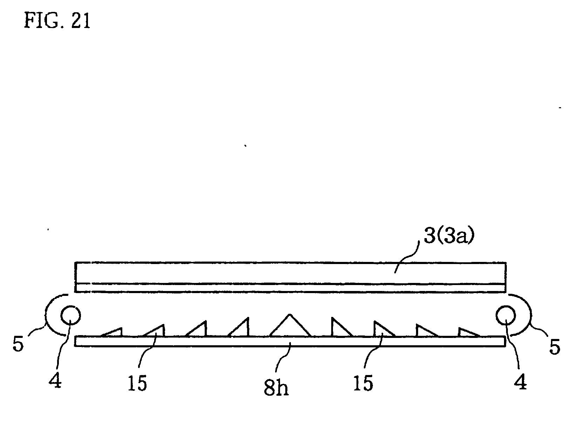

Although irradiation has been made with the single light source 4 from the side of an edge member of the reflecting plate in the above-mentioned Embodiments 1 to 4, however, in case that the liquid crystal display panels 3 and 3a are large-size panels, the light sources 4 may be arranged on the both sides of the reflecting plate 8h as shown in Fig. 21. In this case, the portion the most distant from the light source 4 becomes the center portion of the panel, and

the inclination angle $\alpha$ of the micro-projections must match with this. In a configuration in which the light sources are arranged on the both sides of the reflecting plate, it is possible to apply the same to the above-described Embodiment 8 as well.

(Other matters)

The display unit having a liquid crystal display panel has been described in the above-mentioned Embodiments 1 to 10. The present invention is not however limited to this, but also applicable even to a display unit having a display panel built with, for example, an electrophoresis element. The illuminating unit of the present invention is applicable not only to a display unit, but also applicable for illuminating a sign, a poster, a photo, or the exhibits in a show window.

The aforementioned concrete embodiments are only the classification of the technical details of the invention, and the invention should not be interpreted in a narrow sense of the words by limiting only to such concrete examples. The invention can be used in various variants within a range not conflicting with the spirit of the invention and the claims thereof.

Industrial Applicability

According to the configuration of the present invention, as described above, the objects of the invention can sufficiently be achieved. More specifically, they are as follows:

(1) It is possible to achieve a smaller thickness and a reduced weight of the illuminating unit and the display unit permitting the achievement of a smaller thickness and a reduced weight; and
(2) In a liquid crystal display unit using a scattering liquid crystal display panel, it is possible to irradiate a diagonal light having a high parallelism onto the scattering liquid crystal display panel, thus permitting reduction of the light reaching the observer in the transmissive state. As a result, there is available a display of a high contrast.

**Claims**

1.  An illuminating unit illuminating an object of illumination, comprising:

    a light source and a reflecting plate which reflects an incident light from the light source, and directs the reflected light to the object of illumination, wherein the said light source is arranged in the proximity of an end of the said reflecting plate.

2.  An illuminating unit according to the claim 1, wherein the said light source is arranged in the proximity of an end of the reflecting plate.

3.  An illuminating unit according to the claim 1, wherein the said light sources are arranged in the proximity of both ends of the reflecting plate.

4.  An illuminating unit illuminating an object of illumination, comprising:

    a light source and a reflecting plate which reflects an incident light from the light source, and directs the reflected light to the object of illumination, wherein the said light source is arranged on a reflecting surface of the reflecting plate.

5.  An illuminating unit according to the claim 4, wherein the said light source is arranged in the proximity of the center of the reflecting surface, and bends in a direction in which the more distant the said reflecting plate is from the light source, the nearer it approaches the object of illumination.

6.  An illuminating unit of the backlight type, -arranged behind an object of illumination, comprising:

    a light source and a reflecting plate, arranged opposite to the both surfaces of the object of illumination, which reflects an incident light from the light source and directs the reflected light to the object of illumination, wherein the light source is arranged in the proximity of an end of the reflecting plate.

7.  An illuminating unit according to the claim 6, wherein the reflecting plate is subjected to a reflecting angle adjusting treatment so that the incident angle of the reflected light entering the object of illumination becomes smaller accordingly as it becomes more distant from the light source so as to uniformly illuminate the object of illumination.

8. An illuminating unit according to the claim 7, wherein the said reflecting angle adjusting treatment is to cause the reflecting plate to bend in a direction approaching the object of illumination according as the reflecting plate becomes more distant from the light source.

9. An illuminating unit according to the claim 8, wherein the reflecting plate bends in a parabola shape.

10. An illuminating unit according to the claim 7, wherein said reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

11. An illuminating unit according to the claim 7, wherein the said reflecting angle adjusting treatment is such that a number of the micro-projections each having a slant surface reflecting the incident light from the light source are formed on the reflecting plate, and the said micro-projections are arranged so that the distribution density thereof becomes gradually larger accordingly as the distance from the light source becomes longer.

12. An illuminating unit according to the claim 7, wherein the said reflecting angle adjusting treatment is such that the reflecting plate bends in a direction approaching the object of illumination according as the reflecting plate becomes more distant from the light source; a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

13. An illuminating unit according to the claim 7, wherein the said reflecting angle adjusting treatment is such that the reflecting plate bends in a direction approaching the object of illumination accordingly as the reflecting plate becomes more distant from the light source; a number of the micro-projections each having a slant surface reflecting the incident light from the light source are formed on the reflecting plate; and these micro-projections are arranged so that the distribution density thereof becomes gradually larger accordingly as the distance from the light source becomes longer.

14. An illuminating unit according to the claim 6, wherein the said illuminating unit has optical means which directs the light from the light source substantially in parallel to the reflecting plate.

15. An illuminating unit according to the claim 14, wherein a diffusing plate is provided between the said reflecting plate and the said object of illumination.

16. A display unit built by use of said illuminating unit according to claim 6, wherein:

a transmissive liquid crystal display panel is arranged as an object of illumination on the surface side of the reflecting plate of the illuminating unit.

17. A display unit built by use of said illuminating unit according to claim 6, wherein:

a transmissive liquid crystal display panel is arranged as an object of illumination on the surface side of the reflecting plate of the illuminating unit; and the said liquid crystal display panel is a liquid crystal display panel of the diffusion display mode, in which the mode is switched over between a transmissive state and a diffusion state on the basis of the presence or absence of impression of a voltage.

18. A display unit built by use of said illuminating unit according to claim 7, wherein:

a transmissive liquid crystal display panel is arranged as an object of illumination on the surface side of the reflecting plate of the illuminating unit; the said liquid crystal display panel is a liquid crystal display panel of the diffusion display mode, in which the mode is switched over between a transmissive state and diffusion state on the basis of the presence or absence of impression of a voltage; and the said reflecting angle adjusting treatment of said reflecting plate is suitable for irradiating a diagonal light of a high parallelism to the liquid crystal display panel, in addition to uniformity of the illumination.

19. A display unit according to the claim 17, wherein the said display unit has optical means which converts the diffusing light from the light source substantially into a parallel light, and directs the same to the reflecting plate.

20. A display unit according to the claim 18, wherein the said display unit has optical means which converts the diffusing light from the light source substantially into a parallel light, and directs the same to the reflecting plate.

21. A front light type illuminating unit arranged on the front side of an object of illumination, comprising:

a light source; a reflecting plate that reflects an incident light from the light source and directs the reflected light to an object of illumination; and a supporting means that supports a base end of the reflecting plate in a rotatable manner so as to make the angle between the reflecting plate and the object of illumination adjustable; wherein the above-described light source is provided on the leading end side of the reflecting plate.

22. A front light type illuminating unit arranged on the front side of an object of illumination, comprising:

a light source; a reflecting plate that reflects an incident light to an object of illumination; and a supporting means that supports a base end of the reflecting plate in a rotatable manner so as to make the angle between the reflecting plate and the object of illumination adjustable; wherein the above-described light source is provided on the side of the object of illumination.

23. An illuminating unit according to the claim 21, wherein, when the said reflecting plate is at a position opposite to the object of illumination so as to ensure uniform illumination of the object of illumination, the said reflecting plate is subjected to a reflecting angle adjusting treatment so that the incident angle of the reflected light entering the object of illumination is smaller from the leading end toward the base end of a reflecting plate.

24. An illuminating unit according to the claim 22, wherein, when the said reflecting plate is at a position opposite to the object of illumination so as to ensure uniform illumination of the object of illumination, the said reflecting plate is subjected to a reflecting angle adjusting treatment so that the incident angle of the reflected light entering the object of illumination is smaller from the leading end toward the base end of the reflecting plate.

25. An illuminating unit according to the claim 23, wherein the said reflecting angle adjusting treatment is such that the reflecting plate bends in a direction in which the nearer the said reflecting plate approaches toward the base end from the leading end, the nearer it approaches the object of illumination

26. An illuminating unit according to the claim 24, wherein the said reflecting angle adjusting treatment is such that the reflecting plate bends in a direction in which the nearer the said reflecting plate approaches toward the base end from the leading end, the nearer it approaches the object of illumination

27. An illuminating unit according to the claim 25, wherein the reflecting plate bends in a parabola shape.

28. An illuminating unit according to the claim 26, wherein the reflecting plate bends in a parabola shape.

29. An illuminating unit according to the claim 23, wherein the said reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

30. An illumination unit according to the claim 24, wherein the said reflecting angle adjusting treatment is such that a number of the micro-projections each having a slant surface reflecting the incident light from the light source are formed on the reflecting plate, and these micro-projections are arranged so that the inclination angle of the slant surface becomes gradually larger accordingly as it becomes more distant from the light source.

31. An illuminating unit according to the claim 23, wherein the said reflecting angle adjusting treatment is such that a number of the micro-projections each having a slant surface reflecting the incident light from the light source are formed on the reflecting plate, and these micro-projections are arranged so that the distribution density becomes gradually larger accordingly as the distance from the light source becomes longer.

**32.** An illuminating unit according to the claim 24, wherein the said reflecting angle adjusting treatment is such that a number of the micro-projections each having a slant surface reflecting the incident light from the light source are formed on the reflecting plate, and these micro-projections are arranged so that the distribution density becomes gradually larger accordingly as the distance from the light source becomes longer.

**33.** An illuminating unit according to the claim 23, wherein the said reflecting angle adjusting treatment is such that the reflecting plate bends in a direction in which the more distant the said reflecting plate becomes from the light source, the nearer it approaches the object of illumination; and a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

**34.** An illuminating unit according to the claim 24, wherein the said reflecting angle adjusting treatment is such that the reflecting plate bends in a direction in which the more distant the said reflecting plate becomes from the light source, the nearer it approaches the object of illumination; and a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

**35.** An illuminating unit according to the claim 23, wherein the said reflecting angle adjusting treatment is such that the reflecting plate bends in a direction in a direction in which the more distant the said reflecting plate becomes from the light source, the nearer it approaches the object of illumination; and a number of the micro-projections each having a slant surface reflecting the incident light from the light source are formed on the reflecting plate; and these micro-projections are arranged so that the distribution density thereof becomes gradually larger accordingly as the distance from the light source becomes longer.

**36.** An illuminating unit according to the claim 24, wherein the said reflecting angle adjusting treatment is such that the reflecting plate bends in a direction in a direction in which the more distant the said reflecting plate becomes from the light source, the nearer it approaches the object of illumination; and a number of the micro-projections each having a slant surface reflecting the incident light from the light source are formed on the reflecting plate; and these micro-projections are arranged so that the distribution density thereof becomes gradually larger accordingly as the distance from the light source become longer.

**37.** An illuminating unit according to the claim 21, wherein the said illuminating unit has optical means which directs the light from the light source substantially in parallel to the reflecting plate.

**38.** An illuminating unit according to the claim 22, wherein the said illuminating unit has optical means which directs the light from the light source substantially in parallel to the reflecting plate.

**39.** An illuminating unit according to the claim 37, wherein a diffusing plate is provided in front of the said object of illumination.

**40.** An illuminating unit according to the claim 38, wherein a diffusing plate is provided in front of the said object of illumination.

**41.** A display unit built by use of the illuminating unit according to the claim 21, wherein:

a reflecting type liquid crystal display panel is arranged as an object of illumination.

**42.** A display unit built by use of the illuminating unit according to the claim 22, wherein:

a reflecting type liquid crystal display panel is arranged as an object of illumination.

**43.** A display unit built by use of the illuminating unit according to the claim 21, wherein:

a reflecting type liquid crystal display panel is arranged as an object of illumination on the surface side of the reflecting plate of the illuminating unit; and the said liquid crystal display panel is a liquid crystal display panel of the diffusion display mode, in which the mode is switched over between a transmissive state and a diffusion state on the basis of the presence or absence of impression of a voltage.

**44.** A display unit built by use of the illuminating unit according to the claim 22, wherein:

a reflecting type liquid crystal display panel is arranged as an object of the illumination on the surface side of the reflecting plate of the illuminating unit; and the said liquid crystal display panel is a liquid crystal display panel of the diffusion display mode, in which the mode is switched over between a transmissive state and a diffusion state on the basis of the presence or absence of impression of a voltage.

**Amended claims under Art. 19.1 PCT**

1. (Deleted)

2. (Deleted)

3. (Deleted)

4. (Deleted)

5. (Deleted)

6. (Deleted)

7. (Deleted)

8. (Deleted)

9. (Deleted)

10. (Amended) A backlight-type illuminating unit arranged behind an object of illumination, comprising:

a light source, and a reflecting plate, arranged opposite to the back face of the object of illumination, reflecting an incident light from the light source, the said light source being arranged in the proximity of an end of the reflecting plate; wherein the said reflecting plate is subjected to a reflecting angle adjusting treatment; the said reflecting angle adjusting treatment is such that a number of the micro-projections each having a slant surface reflecting the incident light from the light source are formed on the reflecting plate; and these micro-projections are arranged so that the inclination angle of said slant surface becomes gradually larger accordingly as the distance from the light source becomes longer.

11. (Amended) A backlight-type illuminating unit arranged behind an object of illumination, comprising:

a light source, and a reflecting plate, arranged opposite to the back face of the object of illumination, reflecting an incident light from the light source, the said light source being arranged in the proximity of an end of the reflecting plate; wherein the said reflecting plate is subjected to a reflecting angle adjusting treatment; the said reflecting angle adjusting treatment is such that a number of the micro-projections each having a slant surface reflecting the incident light from the light source are formed on the reflecting plate; and these micro-projections are arranged so that the distribution density thereof becomes gradually larger accordingly as the distance from the light source becomes longer.

12. (Amended) A backlight-type illuminating unit arranged behind an object of illumination, comprising:

a light source, and a reflecting plate, arranged opposite to the back face of an object of illumination, reflecting an incident light from the light source; the said light source being arranged in the proximity of an end of the reflecting plate; wherein the said reflecting plate is subjected to a reflecting angle adjusting treatment; the said reflecting angle adjusting treatment is such that the reflecting plate bends in a direction in which the more distant the said reflecting plate becomes from the light source, the nearer it approaches the object of illumination; and a number of the micro-projections each having a slant surface reflecting the incident light from the light source are formed on the said reflecting plate; and these micro-projections are arranged so that the inclination angle of the slant surface of the micro-projections becomes gradually larger accordingly as the distance from the light source becomes longer.

13. (Amended) A backlight-type illuminating unit arranged behind an object of illumination, comprising:

a light source, and a reflecting plate, arranged opposite to the back face of an object of illumination, reflecting an incident light from the light source; the said light source being arranged in the proximity of an end of the reflecting plate;
wherein the said reflecting plate is subjected to a reflecting angle adjusting treatment; the said reflecting angle adjusting treatment is such that the reflecting plate bends in a direction in which the more distant the said reflecting plate becomes from the light source, the nearer it approaches the object of illumination; and a number of the micro-projections each having a slant surface reflecting the incident light from the light source are formed on said reflecting plate; and these micro-projections are arranged so that the distribution density of the micro-projections becomes gradually larger accordingly as the distance from the light source becomes longer.

14. (Amended) An illuminating unit according to the claim 10, wherein the said illuminating unit has optical means which directs the light from the light source substantially in parallel to the reflecting plate.

15. An illuminating unit according to the claim 14, wherein a diffusing plate is provided between the said reflecting plate and the said object of illumination.

16. (Amended) A display unit built by use of the said illuminating unit according to the claim 12, wherein:

a transmissive-type liquid crystal display panel is arranged as an object of illumination on the surface side of the reflecting plate of the illuminating unit.

17. (Amended) A display unit built by use of the said illuminating unit according to claim 12, wherein:

a transmissive-type liquid crystal display panel is arranged as an object of illumination on the surface side of the reflecting plate of the illuminating unit; and the said liquid crystal display panel is a liquid crystal display panel of the diffusion display mode, in which the mode is switched over between a transmissive state and a diffusion state on the basis of the presence or absence of impression of a voltage.

18. (Amended) A display unit built by use of the said illuminating unit according to claim 12, wherein:

a transmissive-type liquid crystal display panel is arranged as an object of illumination on the surface side of the reflecting plate of the illuminating unit; the said liquid crystal display panel is a liquid crystal display panel of the diffusion display mode, in which the mode is switched over between a transmissive state and a diffusion state on the basis of the presence or absence of impression of a voltage; and the said reflecting angle adjusting treatment of the said reflecting plate is suitable for irradiating a diagonal light of a high parallelism to the liquid crystal display panel, in addition to uniformity of the illumination.

19. A display unit according to the claim 17, wherein the said display unit has optical means which converts the diffusing light from the light source substantially into a parallel light and directs the same to the reflecting plate.

20. A display unit according to the claim 18, wherein the said display unit has optical means which converts the diffusing light from the light source substantially into a parallel light and directs the same to the reflecting plate.

21. (Deleted)

22. (Deleted)

23. (Deleted)

24. (Deleted)

25. (Deleted)

26. (Deleted)

27. (Deleted)

28. (Deleted)

29. (Amended) A front-light type illuminating unit arranged in front of an object of illumination, comprising:

a light source, a reflecting plate reflecting an incident light from the light source and directing the same to an object of illumination, and a supporting means that supports a base end of the reflecting plate in a rotatable manner so that the angle between the reflecting plate and the object of illumination is adjustable; said light source being provided on the leading end side of the reflecting plate; wherein:
the said reflecting plate is subjected to a reflecting angle adjusting treatment; the said reflecting angle adjusting treatment is such that a number of the micro projections each having a slant surface reflecting the incident light from the light source are formed on the reflecting plate; and these micro-projections are arranged so that the inclination angle of the slant surface becomes gradually larger accordingly as the distance from the light source becomes longer.

30. (Amended) A front-light type illuminating unit arranged in front of an object of illumination, comprising:

a light source, a reflecting plate reflecting an incident light from the light source and directing the same to an object of illumination, and a supporting means that supports a base end of the reflecting plate in a rotatable manner so that the angle between the reflecting plate and the object of illumination is adjustable; the said light source being provided on the side of the object of illumination; wherein:
the said reflecting plate is subjected to a reflecting angle adjusting treatment; the said reflecting angle adjusting treatment is such that a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

31. (Amended) A front-light type illuminating unit arranged in front of an object of illumination, comprising:

a light source, a reflecting plate reflecting an incident light from the light source and directing the same to an object of illumination, and a supporting means that a base end of the reflecting plate supports in a rotatable manner so that the angle between the reflecting plate and the object of illumination is adjustable; the said light source being provided on the side of the object of illumination; wherein:
the said reflecting plate is subjected to a reflecting angle adjusting treatment; the said reflecting angle adjusting treatment is such that a number of micro-projections each having a slant surface reflecting the incident light from the light source are formed on the reflecting plate; and these micro-projections are arranged so that the distribution density thereof becomes gradually larger accordingly as the distance from the light source becomes longer.

32. (Amended) A front-light type illuminating unit arranged in front of an object of illumination, comprising:

a light source, a reflecting plate reflecting an incident light from the light source and directing the same to an object of illumination, and a supporting means that supports a base end of the reflecting plate in a rotatable manner so that the angle between the reflecting plate and the object of illumination is adjustable; the said light source being provided on the leading end side of the reflecting plate; wherein:
the said reflecting plate is subjected to a reflecting angle adjusting treatment; the said reflecting angle adjusting treatment is such that a number of the micro-projections each having a slant surface reflecting the incident light from the light source are formed on the reflecting plate; and these micro-projections are arranged so that the distribution density thereof becomes larger accordingly as the distance from the light source becomes longer.

33. (Amended) A front light type illuminating unit arranged in front of an object of illumination, comprising:

a light source, a reflecting plate reflecting an incident light and directing the same to an object of illumination, and a supporting means that supports a base end of the reflecting plate in a rotatable manner so that the angle between the reflecting plate and the object of illumination is adjustable; the said light source being provided on the leading end side of the reflecting plate; wherein:

the said reflecting plate is subjected to a reflecting angle adjusting treatment; the said reflecting angle adjusting treatment is such that the reflecting plate bends in a direction approaching the object of illumination according as the reflecting plate is more distant from the light source; a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

34. (Amended) A front light type illuminating unit arranged in front of an object of illumination, comprising:

a light source, a reflecting plate reflecting an incident light and directing the same to an object of illumination, and a supporting means that supports a base end of the reflecting plate in a rotatable manner so that the angle between the reflecting plate and the object of illumination is adjustable; the said light source being provided on the side of the object of illumination; wherein:
the said reflecting plate is subjected to a reflecting angle adjusting treatment; the said reflecting angle adjusting treatment is such that the reflecting plate bends in a direction approaching the object of illumination according as the reflecting plate is more distant from the light source; a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

35. (Amended) A front light type illuminating unit arranged in front of an object of illumination, comprising:

a light source, a reflecting plate reflecting an incident light and directing the same to an object of illumination, and a supporting means that supports a base end of the reflecting plate in a rotatable manner so that the angle between the reflecting plate and the object of illumination is adjustable; the said light source being provided on the leading end side of the reflecting plate; wherein:
the said reflecting plate is subjected to a reflecting angle adjusting treatment; the said reflecting angle adjusting treatment is such that the reflecting plate bends in a direction approaching the object of illumination according as the reflecting plate is more distant from the light source; a number of the micro-projections each having a slant surface reflecting the incident light from the light source are formed on the reflecting plate; and these micro-projections are arranged so that the distribution density thereof becomes gradually larger accordingly as the distance from the light source becomes longer.

36. (Amended) A front light type illuminating unit arranged in front of an object of illumination, comprising:

a light source, a reflecting plate reflecting an incident light and directing the same to an object of illumination, and a supporting means that supports a base end of the reflecting plate in a rotatable manner so that the angle between the reflecting plate and the object of illumination is adjustable; the said light source being provided on the side of the object of illumination wherein:
the said reflecting plate is subjected to a reflecting angle adjusting treatment; the said reflecting angle adjusting treatment is such that the reflecting plate bends in a direction approaching the object of illumination according as the reflecting plate is more distance from the light source; a number of the micro-projections each having a slant surface reflecting the incident light from the light source are formed on the reflecting plate; and these micro-projections are arranged so that the inclination angle of the slant surface becomes gradually larger accordingly as the distance from the light source becomes longer.

37. (Amended) An illuminating unit according to the claim 33, wherein the said illuminating unit has optical means which directs the light from the light source substantially in parallel to the reflecting plate.

38. (Deleted)

39. An illuminating unit according to the claim 37, wherein a diffusing plate is provided in front of the said object of illumination.

40. (Deleted)

41. (Amended) A display unit built by use of the illuminating unit according to the claim 33, wherein:

a reflecting type liquid crystal display panel is arranged as an object of illumination.

42. (Deleted)

43. (Amended) A display unit built by use of the illuminating unit according to claim 33, wherein:

a reflecting-type liquid crystal display panel is arranged as an object of illumination on the surface side of the reflecting plate of the illumination unit; the said liquid crystal display panel is a liquid crystal display panel of the diffusion display mode in which the mode is switched over between a transmissive state and a diffusion state on the basis of the presence or absence of impression of a voltage; and the said reflecting angle adjusting treatment of the said reflecting plate is a reflecting angle adjusting treatment suitable for irradiating a diagonal light having a high parallelism onto the liquid crystal display panel, in addition to uniformity of the illumination.

44. (Deleted)

**Statement under Art. 19.1 PCT**

(1) The invention according to the claims 10 to 20 provides a backlight-type illuminating unit arranged behind an object of illumination, which has a light source and a reflecting plate, arranged opposite to the back face of the object of illumination, reflecting an incident light from the light source and directing the reflected light to the object of illumination. The light source is arranged in the proximity of an end of the reflecting plate, and the reflecting plate is subjected to a reflecting angle adjusting treatment.

(2) The invention according to the claims 29, 31, 33, 35, 37, 39, 41, and 43 provides a front light type illuminating unit arranged on the front side of an object of illumination, which has a light source, a reflecting plate reflecting an incident light from the light source, and a supporting means that supports a base end of the reflecting plate in a rotatable manner so that the angle between the reflecting plate and the object of illumination is adjustable. The light source is provided on the leading end side of the reflecting plate, and the reflecting plate is subjected to a reflecting angle adjusting treatment.

(3) The invention according to the claims 30, 32, 34, and 36 provides a front light type illuminating unit arranged in front of an object of illumination, which has a light source, a reflecting plate reflecting an incident light from the light source and directing the same to the object of illumination, and a supporting means that supports a base end of the reflecting plate in a rotatable manner so that the angle between the reflecting plate and the object illumination is adjustable. The light source is provided on the side of the object of illumination, and the reflecting plate is subjected to a reflecting angle adjusting treatment.

FIG. 1

FIG. 2

FIG. 3

FIG. 4

FIG. 5

EP 1 093 105 A1

FIG. 6

FIG. 7

FIG. 8

EP 1 093 105 A1

FIG. 9

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

55

56

56

FIG. 24

60      63        61

62

# INTERNATIONAL SEARCH REPORT

| | International application No. |
|---|---|
| | PCT/JP00/01159 |

| A. CLASSIFICATION OF SUBJECT MATTER |
|---|
| Int.Cl⁷    G09F 9/00 , G02F 1/13357 |
| According to International Patent Classification (IPC) or to both national classification and IPC |

| B. FIELDS SEARCHED |
|---|
| Minimum documentation searched (classification system followed by classification symbols) |
| Int.Cl⁷    G09F 9/00 , G02F 1/13357 |
| Documentation searched other than minimum documentation to the extent that such documents are included in the fields searched |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X | JP, 2-32320, A (TAMA ELECTRIC CO. LTD.), 02 February, 1990 (02.02.90)    (Family: none) | 1,3 |
| Y | | 2,6-20 |
| Y | JP, 59-212876, A (Mitsubishi Electric Corporation), 01 December, 1984 (01.12.84)    (Family: none) | 2,6-20 |
| X | JP, 62-262023, A (Hitachi, Ltd., HITACHI DEVICE ENG. CO. LTD.), 14 November, 1987 (14.11.87)    (Family: none) | 4,5 |
| Y | JP, 54-53998, A (NICHIDEN VARIAN K.K.), 27 April, 1979 (27.04.79)    (Family: none) | 7-13,18,20, 23-36 |
| Y | JP, 6-194653, A (International Business Machines Corp.), 15 July, 1994 (15.07.94) & EP, 590511, A      & US, 5339179, A & BR, 9303492, A | 10-13,29-36 |
| Y | Microfilm of the specification and drawings annexed to the request of Japanese Utility Model Application No.111466/1988    (Laid-open    No.33083/1990),    (Sony Corporation), 01 March, 1990 (01.03.90)    (Family: none) | 14,15, 19,20,37-40 |

| ☒ Further documents are listed in the continuation of Box C. | ☐ See patent family annex. |
|---|---|

* Special categories of cited documents:
"A"   document defining the general state of the art which is not considered to be of particular relevance
"E"   earlier document but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 19 May, 2000 (19.05.00) | 30.05.00 |

| Name and mailing address of the ISA/ Japanese Patent Office | Authorized officer |
|---|---|
| Facsimile No. | Telephone No. |

Form PCT/ISA/210 (second sheet) (July 1992)

**EP 1 093 105 A1**

| | INTERNATIONAL SEARCH REPORT | International application No. |
|---|---|---|
| | | PCT/JP00/01159 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 10-115829, A (SEIKO EPSON CORPORATION), 06 May, 1998 (06.05.98) (Family: none) | 17-20, 43,44 |
| Y | JP, 10-246886, A (OMRON CORPORATION), 14 September, 1998 (14.09.98) (Family: none) | 21,23,25,27, 29,31,33,35, 37,39,41,43 |
| EX | JP, 11-212084, A (Sharp Corporation), 06 August, 1999 (06.08.99) (Family: none) | 22 |
| Y | JP, 3-109590, A (Matsushita Electric Ind. Co., Ltd.), 09 May, 1991 (09.05.91) (Family: none) | 22,24,26,28, 30,32,34,36, 38,40,42,44 |
| Y | JP, 10-268308, A (Sharp Corporation), 09 October, 1998 (09.10.98) & CN, 1195119, A | 39,40 |
| A | Microfilm of the specification and drawings annexed to the request of Japanese Utility Model Application No.70596/1990 (Laid-open No.28623/1992) (Casio Computer Co, Ltd.), 06 March, 1992 (06.03.92) (Family: none) | 10 |
| A | DE,3123369,A (VDO Adolf Schindling AG) 12.June.1981(12.06.81) (Family: none) | 10 |
| A | JP,2-165373,A (Sharp Corporation) 26.June.1990(26.06.90) &US,5091873,A | 22 |
| A | JP,10-268787,A (Sony Corporation) 9.October.1998(09.10.98) (Family: none) | 21 |
| A | JP,62-204289,A (Sanyo Electric Co., Ltd.) 8.September.1987(08.09.87) (Family: none) | 7 |
| A | JP,58-166379,A (SHIBAURA SEISAKUSHO K.K.) 1.October.1983(01.10.83) (Family: none) | 22 |
| A | JP,5-281540,A(TOSHIBA LIGHTING & TECHNOLOGY CORPORATION) 29.October.1993(29.10.93) (Family: none) | 14 |
| A | JP,63-228188,A(Sony Corporation) 22.September.1988(22.09.88) (Family: none) | 10 |

Form PCT/ISA/210 (continuation of second sheet) (July 1992)

50